# EUROPÄISCHE PATENTSCHRIFT

(11) **EP 2 109 963 B1**
(45) Veröffentlichungstag und Bekanntmachung des Hinweises auf die Patenterteilung: **12.12.2012**
(21) Anmeldenummer: 07819102.0
(22) Anmeldetag: 18.10.2007
(51) Int. Cl.: H04L 12/413, G06K 19/07, H01F 38/14, H04B 5/00, G06F 13/374

(54) **VERFAHREN UND VORRICHTUNG ZUR BUSARBITRATION, UMRICHTER UND FERTIGUNGSANLAGE**
METHOD AND DEVICE FOR BUS ARBITRATION, CONVERTER AND MANUFACTURING INSTALLATION
PROCÉDÉ ET DISPOSITIF D'ARBITRAGE ENTRE BUS, CONVERTISSEUR ET INSTALLATION DE FABRICATION

(30) Priorität: 03.11.2006 DE 102006052297
(43) Veröffentlichungstag der Anmeldung: 21.10.2009
(60) Teilanmeldung: 12000773.7
(73) Patentinhaber: SEW-EURODRIVE GmbH & Co. KG, 76646 Bruchsal (DE)
(72) Erfinder: HUA, Zhidong, 76131 Karlsruhe (DE); SIMON, Olaf, 76646 Bruchsal (DE); ZHOU, Wenwang, 70435 Stuttgart (DE); MERTZLUFFT-PAUFLER Cornelius, 79102 Freiburg im Breisgau (DE)
(86) Internationale Anmeldenummer: PCT/EP2007/009035
(87) Internationale Veröffentlichungsnummer: WO 2008/052668

(56) Entgegenhaltungen:
- GB-A- 2 230 166
- US-A- 4 451 881
- US-A- 4 626 843

## Beschreibung

Die Erfindung betrifft ein Verfahren und eine Vorrichtung zur Busarbitration, einen Umrichter und eine Fertigungsanlage.

Aus G. Schnell: Systeme in der Automatisierungs- und Prozesstechnik, Vieweg: Braunschweig/Wiesbaden, 5. Auflage 2003, Kapitel 1.3.6 und aus der Seite http:Ilde.wikipedia.orglwiki/Arbitration, Version vom 9. August 2006, 20:41 Uhr, der deutschsprachigen Ausgabe des Nachschlagewerkes Wikipedia ist Arbitration bekannt als ein Verfahren, mit dem unter Vermeidung von Konflikten, insbesondere Zugriffskonflikten auf einen Bus, mehreren Busteilnehmern Ressourcen, beispielsweise Zugriffszeiten auf einen Bus, zugewiesen werden. Es handelt sich bei der Arbitration also um ein Verfahren zur Busvermittlung. Die Erfindung bezieht sich auf eine solche Arbitration. Insbesondere ist dabei ein Arbitrationsverfahren eine vor einer möglichen Konfliktentstehung, insbesondere bei Projektierung des Bussystems, festgelegte Vorgehensweise, anhand derer die Busteilnehmer einen aufgetretenen Konflikt feststellen und auflösen können, wobei diese Auflösung zumindest in der Festlegung besteht, welcher Teilnehmer gegenüber den anderen beteiligten Teilnehmern eine höhere Priorität und also höheren Vorrang hat. Bei dem genannten Zugriff handelt es sich beispielsweise um ein Senden von Daten.

Konfliktvermeidung ist bei Bus-Systemen mit zufälligen, also nicht deterministischen Buszugriffsverfahren notwendig. Solche Systeme sind Multimaster-Systeme, also Systeme, bei denen mehrere Busteilnehmer selbständig auf einen Bus zugreifen dürfen. Die Erfindung beschäftigt sich insbesondere mit Bus-Systemen, die eine dezentrale Busvermittlung, also Arbitration, verwenden. Zu solchen Bus-Systemen zählen Ethernet und CAN. Die Busvermittlung erfolgt mittels Carrier Sense Multiple Access oder CSMA.

Carrier Sense Multiple Access oder CSMA ist ein Busvermittlungs-Verfahren, mit dem Busteilnehmer in einem dezentralen Netz ein Zugriffsrecht auf den Bus erlangen können. CSMA Collision Detection oder CSMA/CD bezeichnet ein Verfahren, bei dem auftretende Kollisionen erkannt werden und bei dem eine Wiederholung der Kollision vermieden wird. CSMA Collision Avoidance oder CSMA/CA ist ein Verfahren zur Kollisionsvermeidung vornehmlich bei funkbasierten Busnetzwerken.

Aus der Seite http://de.wikipedia.org/wiki/Controller_Area_Network in der Version vom 9. Oktober 2006 um 9:59 Uhr des Nachschlagewerks Wikipedia, deutschsprachige Ausgabe, ist das Controller Area Network oder CAN als ein serielles Bussystem bekannt, bei dem die Kommunikationsteilnehmer durch Bit-Arbitration Kollisionen beim Buszugriff vermeiden. Bei CAN-Bussystem werden binäre Daten in Amplitudenumtastung, auch on-off-keying- oder OOK-Verfahren genannt, übertragen, was eine berührungslose, induktive Übertragung erschwert.

Aus der Seite http://de.wikipedia.org/wiki/FlexRay in der Version vom 14. Oktober 2006, 23:07 Uhr, des Nachschlagewerks Wikipedia, deutschsprachige Ausgabe, ist FlexRay als ein serielles, deterministisches und fehlertolerantes Bussystem für den Einsatz im Automobil, vergleichbar mit TTP/C oder EC-Net, bekannt.

Aus Michael Reisner: Ethernet. Das Grundlagenbuch, Franzis' Verlag (2002) ist Ethernet als eine Datennetztechnologie bekannt, die den Datenaustausch zwischen in einem lokalen. Netzwerk zusammengeschlassenen Geräten ermöglicht.

Aus der US 3 488 445 ist ein orthogonal frequency-division multiplexing oder OFDM-Verfahren als ein Mehrträger-Modulationsverfahren zur Datenübertragung bekannt, bei dem mehrere Sub-Signalträger gleichzeitig amplitudenmoduliert werden. Diese Sub-Signalträger sind häufig Frequenzbänder in einem gemeinsam genutzten Medium, beispielsweise Luft oder eine Datenleitung. Durch die Verwendung von mehreren Sub-Signalträgern sind pro Symbol mehrere Bit übertragbar. Die Symboldauer ist gegenüber Einträgerverfahren erheblich länger. Die einzelnen Bits werden in der Regel binär durch Vorhandensein (logisch Eins) beziehungsweise Nicht-Vorhandensein (logisch Null) einer sinusförmigen Anregung mit einer zum Sub-Signalträger gehörenden Frequenz über die gesamte Symboldauer realisiert.

Aus der DE 196 35 813 A1 ist ein digitales Übertragungsverfahren bekannt, bei dem eine Aufteilung der im jeweiligen Mehrträger-Modulationsverfahren belegten

Kommunikationskanäle, dort Träger genannt, in Unterkanäle, dort Unterblöcke genannt, erfolgt.

Aus der DE 44 46 779 C2 und der WO 92/17929 sind Verfahren zur berührungslosen Energieübertragung bekannt, bei denen eine induktiv schwache Kopplung vorliegt.

Aus der Seite http://de.wikipedia.org/wiki/Kanal_%28Informationstheorie%29, Version vom 30. August 2006, 15:54 Uhr, der deutschsprachigen Ausgabe des Nachschlagewerkes Wikipedia ist ein Gerät beziehungsweise eine Vorrichtung oder ein Träger, das oder die oder der zum Übermitteln von Daten über räumliche oder zeitliche Distanz geeignet ist, als Kanal im informationstheoretischen Sinne, auch Kommunikationskanal, bekannt.

Aus der GB 2 230 166 A ist ein Verfahren zur Zuweisung von Ressourcen bekannt, bei dem ein paralleles Arbitrationsverfahren nur dann eingeleitet wird, wenn eine Zugriffskollision erkannt wird. Die Teilnehmer legen vor der Übertragung von Nutzdaten über einen Datenbus BS jeweils ihre Adresse in Form einer einzigen, binär kodierten Zahl auf einem separaten Arbitrierungsbus AB an, wobei die zulässigen Adressen eine festgelegte Zahl von Einsen aufweisen. Eine Zugriffskollision wird genau dann erkannt, wenn die Zahl der Einsen auf dem Arbitrierungsbus AB größer als diese festgelegte Zahl ist.

Aus der US 4 626 843 ist ein Bus-System mit Multimaster-Kommunikation und mit einer parallelen Arbitration von Busanfragen bekannt, bei dem jeder der Busknoten eine Identifikationsnummer aufweist und bei dem in der Arbitration relative Prioritäten aus der Identifikationsnummer des anfragenden Busknotens und der identifikationsnummer desjenigen Busknotens, der zuletzt Buszugriff hatte, ermittelt wird.

Aus der US 2005/0225188 A1 ist ein Verfahren zum drahtlosen und berührungslosen Transport von Energie und Daten und ein entsprechendes Gerät bekannt, wobei das Gerät einen Stator und einen Rotor umfasst, die beide jeweils mit Windungen versehen sind, wodurch Daten und Energie induktiv übertragbar sind.

Aus der WO 2007 /010083 A1 ist eine Vorrichtung zur Datenübertragung bekannt, bei der zumindest Diagnosesignale zwischen einem Motor und einem Frequenzumrichter, der den Motor steuert, übertragen werden, wobei der Motor und der Frequenzumrichter durch ein Motorkabel verbunden sind, an dessen beiden Enden jeweils eine Hochfrequenz-Datenübertragungsvorrichtung angeschlossen ist.

Aus der US 5 422 913 A ist ein Kommunikationssystem mit differentieller Phasenumtastung bekannt, bei dem die mit einer niedrigen Nutzerübertragungsrate zu übertragenden Daten mit einem Pseudozufallscode multipliziert, redundant auf einem Übertragungskanal mit erhöhter Übertragungsrate übertragen und am Empfänger integriert werden werden.

Aus der US 4 451 881 A ist ein Verfahren nach dem Oberbegriff des Anspruchs 1 bekannt, bei welchem die Identüikationseinheiten als Low- bzw. High-Pegel auf jeweils einem Bit zugeordnete Drähte gelegt werden.

Der Erfindung liegt die Aufgabe zugrunde, eine Vorrichtung und ein Verfahren zur Busarbitration derart weiterzubilden, dass der erforderliche konstruktive Aufwand verringert ist.

Erfindungsgemäß wird die Aufgabe bei dem Verfahren nach den in Anspruch 1 und bei der Vorrichtung zur Busarbitration nach den in Anspruch 13 angegebenen Merkmalen gelöst.

Wichtige Merkmale der Erfindung eines Verfahrens zur Busarbitration sind In Anspruch 1 angegeben, insbesondere ist somit vorgesehen, dass Teilnehmern, die über einen Bus kommunizieren, jeweils eine eindeutig identifizierende Folge von Identifikationseinheiten zugeordnet ist, wobei eine Anzahl" nummerierter bidirektionaler Kommunikationskanäle verwendet wird, wobei die Zahl n größer als eins ist, und mindestens ein Kommunikationsteilnehmer eine Kommunikationsaufnahme ausführt, wobei er bei Kommunikationsbeginn in einem ersten Zeitabschnitt zur Kommunikationsaufnahme prüft, ob ein weiterer Teilnehmer mit einer höheren Priorität eine Kommunikationsaufnahme ausführt, wobei die Priorität durch Vergleich der bei Kommunikationsaufnahme über die Kommunikationskanäle ausgesendeten Information und der bei Kommunikationsaufnahme von dem weiteren Teilnehmer über die Kommunikationskanäle empfangenen Information bestimmt wird,
wobei der erste Zeitabschnitt mehrere Zeitsegmente umfasst, wobei
a) in einem ersten Zeitsegment von einem Kommunikationsteilnehmer eine Identifikationseinheit über die Kommunikationskanäle gesendet wird und gleichzeitig die auf allen Kommunikationskanälen jeweils anliegenden Signale erfasst werden,
b1) bei Übereinstimmung der erfassten Signale mit der gesendeten Identifikationseinheit der Kommunikationsteilnehmer in einem auf das erste Zeitsegment folgende Zeitsegment mit einer nächsten Identifikationseinheit gemäß Schritt a) fortfährt,
d) nach Sendung der vollständigen Identifikation der Kommunikationsteilnehmer mit dem Senden von Nutzdaten beginnt.

Von Vorteil ist dabei, dass ein weiteres, alternatives Verfahren zur Busarbitration bereitgestellt wird, dass durch die simultane Verwendung mehrerer Kommunikationskanäle charakterisiert ist. Durch die Verwendung mehrerer Kanäle ist die Bandbreite der Übertragung gegenüber der Benutzung eines einzigen Kanals vergrößert, wodurch bei gleichbehaltener Übertragungsrate eine längere Zeitdauer der einzelnen Signalwörter ermöglicht ist. Diese längere Zeitdauer Ist vorteilhaft einsetzbar bei induktiver Kopplung der Signalübertragung. Somit ist die Signalübertragung auf induktivem Wege mit reduzierter Fehlerrate durchführbar.

Durch die Überprüfung bei Kommunikationsaufnahme ist ein übergeordneter - Kommunikationsteilnehmer, der bei Zugriffskonflikten die Kommunikationsreihenfolge regelt, verzichtbar. Somit sind in den Bus neue Teilnehmer einfach modular einbindbar, und verzichtbare Teilnehmer sind ebenso entfernbar. Eine Umprogrammierung einer zentralen Bussteuerung ist insbesondere verzichtbar.

Der Kommunikationsbeginn bezeichnet hierbei den Zeitpunkt, zu dem ein Teilnehmer beginnt, Signale zu senden, die dem beabsichtigten Senden von Nutzdaten vorausgehen. Diese Signale, die nach einem bei der Busprojektierung festgelegten Protokoll erfolgen, werden in einem ersten Zeitabschnitt gesendet. Sie kennzeichnen die Kommunikationsaufnahme durch den betreffenden Teilnehmer.

Durch die Untereilung des ersten Zeitabschnitts in Zeitsegmente ist ein Bus mit einer Bustaktung verwendbar. Vorzugsweise werden als Zeitsegmente die Taktsegmente einer Bustaktung verwendet. Die Identifikation ist In Identifikationseinheiten aufteilbar, die den Zeitsegmenten zuweisbar sind. Von Vorteil ist weiter, dass die einzelnen Zeitsegmente doppelt nutzbar sind, einerseits zum Senden eigener Identifikationseinheiten und andererseits zum Empfangen von Signalen weiterer Teilnehmer.

Als physikalische Realisierungen eines Kommunikationskanals sind vorteilhaft elektrische Leiter, Drähte, Hohlleiter, Dielektrika und Luft beziehungsweise Vakuum oder der physikalische Raum an sich einsetzbar. Ein Kommunikationskanal ist auch vorteilhaft als Funkrichtstrecke oder als ungerichtete Signalsendeeinrichtung und/oder Signalempfangseinrichtung ausbildbar.

Die Erfindung ist vorteilhaft einsetzbar bei einer Anlage zur berührungslosen Energieübertragung, umfassend eine an ein Primärleitersystem induktiv gekoppelte Sekundärspule, welche insbesondere zur Bildung eines Schwingkreises derart mit einer Kapazität in Reihe oder parallel beschaltet ist, dass die zugehörige Resonanzfrequenz im Wesentlichen der Wechselstromfrequenz des Primärstromes entspricht. Der Strom in der Sekundärspule weist zwei Anteile auf, und zwar zum einen den bei Transformatoren bekannte, übersetzten Stromanteil, zum anderen ein Resonanz-Stromanteil, welcher durch die Schwingkreisanordnung bewirkt ist. Die Sekundärspule ist mit zumindest einer Kapazität in Serie und/oder parallel derart geschaltet, dass die Resonanzfrequenz der Mittelfrequenz im Wesentlichen entspricht. Auf diese Weise ist auch bei einer schwachen induktiven Kopplung, die beispielsweise bei großem Luftspalt zwischen Primärleiter und Sekundärleiter auftritt, ein hoher Wirkungsgrad bei der Übertragung gesichert. Die Schwingkreisanordnung ermöglicht die Übertragung der Energie über einen großen Luftspalt. Trotz des großen Luftspaltes ist ein hoher Wirkungsgrad erreichbar. Eine Anlage zur berührungslosen Energieübertragung umfasst an eine Primärleitung induktiv gekoppelte Verbraucher, wobei In die Primärleitung ein im Wesentlichen konstanter mittelfrequenter Wechselstrom eingeprägt wird, insbesondere im Wesentlichen unabhängig von der von den Verbrauchern entnommenen Leistung. Unabhängig von der Anzahl der Verbraucher und der entnommenen Leistung wird der Strom eingeprägt. Die Verbraucher umfassen jeweils einen oder mehrere Kondensatoren, der oder die mit einer den Verbraucher versorgenden Sekundärspule derart seriell und/oder parallel beschaltet ist oder sind, dass die entsprechende Resonanzfrequenz Im Wesentlichen der Mittelfrequenz entspricht. Somit ist ein großer Luftspalt zwischen Primärleiter und Sekundärspule realisierbar.

Bei einer vorteilhaften Ausgestaltung sind die Kommunikationskanäle voneinander verschiedene Frequenzbänder auf einem gemeinsamen Träger. Verteilhaft sind somit bekannte Träger wie metallische Leiter oder Vakuum beziehungsweise Luft verwendbar.

Bei einer vorteilhaften Ausgestaltung wird der Träger zusätzlich zur berührungslosen Energieübertragung verwendet, insbesondere ist der Träger als Primärleiter eines Systems zur berührungslosen Energieversorgung ausgebildet. Von Vorteil ist dabei, dass Übertragungskabel einsparbar sind, und dass über die konsequente Einsparung von Steckverbindungen eine hohe Schutzart der Anlage erreichbar ist.

Bei einer vorteilhaften Ausgestaltung werden Signale nur auf denjenigen Kommunikationskanälen erfasst, auf denen durch den Kommunikationsteilnehmer bei der Aussendung der Identifikationseinheit keine Signale ausgesendet werden,

Bei einer vorteilhaften Weiterbildung umfasst der erste Zeitabschnitt mehrere Zeitsegmente, wobei
b2) bei Abweichung der erfassten Signale von der gesendeten Informationseinheit der Kommunikationsteilnehmer aus den abweichenden, erfassten Signale die Prioritäten der weiteren Kommunikationsteilnehmer ermittelt, die Signale gesendet haben und der Kommunikationsteilnehmer in einem auf das aktuelle Zeitsegment folgende Zeitsegment mit einer nächsten Informationseinheit gemäß Schritt a) fortfährt, wenn er die höchste Priorität unter den ermittelten Prioritäten besitzt.

Von Vorteil ist dabei, dass ein Dialog zweier Teilnehmer zur Festlegung der Priorität verzichtbar ist, da der jeweils für alle Teilnehmer bestimmten Identifikationseinheit bereits Informationen über die Priorität des Senders entnehmbar ist. Von Vorteil ist weiter, dass die Prioritätsinformation derart in einzelne Einheiten aufteilbar ist, dass bei mehreren gleichzeitig sendenden Teilnehmer iterativ feststellbar ist, welcher Teilnehmer die höchste Priorität besitzt und folglich Nutzdaten senden darf. Insbesondere müssen nicht alle Teilnehmer warten, bis die vollständige Priorität übermittelt wurde.

Bei einer vorteilhaften Weiterbildung umfasst der erste Zeitabschnitt mehrere Zeitsegmente, wobei
c) der Kommunikationstellnehmer in einen Zuhör-Modus oder einen Warte-Modus wechselt, wenn er nicht die höchste Priorität unter den ermittelten Prioritäten besitzt.

Im Zuhör-Modus stellt der Teilnehmer den Sendevorgang ein und überwacht weiterhin den Bus. Der Abschluss des Sendevorgangs des Teilnehmers mit höchster Priorität ist somit durch die Teilnehmer mit niedrigerer Priorität feststellbar. Somit ist die Bandbreite des Bussystems vorteilhaft nutzbar, insbesondere sind Leerlaufzeiten, also Zeitabschnitte ohne Sendevorgang eines Teilnehmers, vermeidbar.

Im Warte-Modus stellt der Teilnehmer den Sendevorgang ein und wartet eine festgelegte Zeitspanne, bevor er eine weitere Aktion vornimmt. Als solche Aktion ist eine erneute Kommunikationsaufnahme durchführbar. Somit ist vorteilhaft eine robuste Busarbitration bereitgestellt.

Wichtige Merkmale der Erfindung eines Verfahrens zur Busarbitration sind zusätzlich in Anspruch 5 angegeben. Insbesondere kann somit vorgesehen sein, dass an einem Bus mehrere Kommunikationsteilnehmer als Busteilnehmer vorgesehen sind, wobei jedem Kommunikationsteilnehmer eine eindeutige Adresse als Folge von Ziffern zugewiesen ist, wobei der Bus getaktet ist und jeder Kommunikationsteilnehmer bei Kommunikationsaufnahme die Ziffern in der Reihenfolge der Folge seiner Adresse nacheinander jeweils für die Dauer eines Taktsegments der Bustaktung als FDM-Signal oder OFDM-Stgnal auf den Bus sendet, gleichzeitig das auf dem Bus anliegende FDM-Signal oder OFDM-Signal abhört und Im folgenden Taktsegment aus der Arbitration ausscheidet, wenn er einen weiteren Kommunikationsteilnehmer, dessen aktuell gesendete Ziffer ein höhere Priorität aufweist als die eigene, feststellt. Von Vorteil ist dabei, dass ein Arbitrationsverfahren für ein asynchrones, serielles Bussystem bereitgestellt ist, das statt Amplitudenumtastung eine Signalübertragung durch sinusförmige Signale erlaubt. Hierdurch sind in den Übertragungsweg der Signale Stellen mit induktiver Kopplung einbaubar, wodurch der Übertragungsweg auch Teilnehmer verbinden kann, die relativ zueinander beweglich sind. Die sinusförmige Gestalt der Signale bewirkt zwar eine langsamere Übertragungsrate, dies wird aber vorteilhaft ausgeglichen durch eine simultane Verwendung mehrerer Kommunikationskanäle.

Bei einer vorteilhaften Ausgestaltung umfasst der Bus mehrere Kommunikationskanäle und es werden folgende Schritte in einer zeitlichen Reihenfolge abgearbeitet:
jeder Kommunikationsteitnehmer sendet in einem ersten Taktsegment die erste Ziffer seiner Folge von Ziffern an die Kommunikationskanäle und hört gleichzeitig die Kommunikationskanäle ab,
jeder Kommunikationsteilnehmer bricht im folgenden Taktsegment das Verfahren ab und/oder geht in einen anderen Zustand über, wenn das abgehörte Signal von den Kommunikationskanälen durch eine überlagerung der gesendeten Ziffer mit einer Ziffer höherer Priorität entsteht,
jeder Kommunikationsteilnehmer wiederholt in den folgenden Taktsegmenten die Schritte i) und ii),
wobei bei jeder Wiederholung nach einer vorgegebenen Reihenfolge ein Kommunikationskanal weniger ausgewertet wird,
bis das abgehörte Signal der ausgewerteten Kommunikationskanäle nicht mehr aus der Überlagerung des betreffenden Anteils seiner gesendeten Ziffer und einer weiteren Ziffer bildbar ist,
jeder Kommunikationsteilnehmer beginnt im folgenden Taktsegment mit dem Senden von Nutzdaten über die Kommunikationskanäle, falls die bestimmte Ziffer die letzte Ziffer in seiner Folge von Ziffern ist,
jeder Kommunikationsteilnehmer fährt mit Schritt i) mit der nächsten Ziffer in seiner Folge von Ziffern fort.
Somit ist ein Arbitrationsverfahren angegeben, das in jedem Fall einen eindeutigen Gewinner produziert, der überdies auch für die Verlierer eindeutig erkannt wird.

Bei einer vorteilhaften Ausgestaltung werden die Ziffern und Nutzdaten über die Kommunikationskanäle im OFDM-Verfahren gesendet, wobei jeder Kommunikationskanal durch ein Frequenzband auf einer elektrischen Leitung, insbesondere Zweidrahtleitung, Koaxialleitung oder sonstige zweipolige Leitung, gebildet wird. Von Vorteil ist dabei, dass Leitungen zur Energieversorgung mitnutzbar sind für die Datenübertragung, insbesondere die Arbitration.

Bei einer vorteilhaften Ausgestaltung sind an den Bus mehrere Kommunikationsteilnehmer abgeschlossen, wobei jedem Kommunikationsteilnehmer eine Nummer zugewiesen ist, wobei folgende Schritte in einer zeitlichen Reihenfolge abgearbeitet werden
der Kommunlkatlonstellnehmer bestimmt die erste Ziffer in der Zahlendarstellung zur Basis n seiner Nummer,
der Kommunikationsteilnehmer sendet ein Signal auf dem Kommunikationskanal, dessen Nummer gleich der bestimmten Ziffer ist, und hört gleichzeitig die übrigen Kommunikationskanäle ab,
der Kommuhikationsteilnehmer bricht das Verfahren ab und/oder geht in einen anderen Zustand über, wenn auf einem Kommunikationskanal mit einer höheren Nummer als die bestimmte Ziffer während des Schrittes II) gesendet wurde,
der Kommunikationsteilnehmer beginnt mit dem Senden von Nutzdaten, falls die bestimmte Ziffer die letzte Ziffer in der Zahlendarstellung zur Basis n seiner Nummer ist,
der Kommunikationsteilnehmer bestimmt die nächstfolgende Ziffer in der Zahlendorstellung zur Basis n seiner Nummer und fährt mit Schritt ii) fort.
Von Vorteil ist dabei, dass eine Busarbitration für Mehrträger-Modulationsverfahren verfügbar ist. Insbesondere ist ein Verfahren beschrieben, mit dem Zugriffskonflikte, auch solche bei gleichzeitigem Zugriff von drei und mehr Teilnehmern, zuverlässig vermittelt werden.
Besonders vorteilhaft ist weiter, dass alle verfügbaren Kanäle des Mehrträger-Modulationsverfahrens zur Busarbitration nutzbar sind. Bei einem gleichzeitigen Zugriff von drei und mehr Teilnehmern Ist sicher feststellbar, welche Prioritäten an dem Zugriffskonflikt beteiligt sind, sodass jeder Teilnehmer fehlerarm eine Entscheidung über den eigenen Rücktritt vom Kommunikationsversuch treffen kann.

Bei einer alternativen vorteilhaften Ausgestaltung wird für die Zahlendarstellung eine von der Kanalzahl verschiedene Basis zugrundegelegt.

Bei einer vorteilhaften Ausgestaltung sendet ein Kommunikationsteilnehmer auf einem reservierten Kommunikationskanal ein Signal, wenn für den Kommunikationsteilnehmer feststeht, insbesondere aufgrund der am Bus anliegenden Signale, dass er das Arbitrierungsverfahren gewinnen wird. Die Kommunikationsteilnehmer die auf dem reservierten Kommunikationskanal ein Signal empfangen, beenden die Arbitrierung und ausscheiden, wenn sie nicht Gewinner des Arbitrationsverfahrens sind. Vorzugsweise wird als reservierter Kommunikationskanal ein für die Adressenübermittlung bereitgehaltener Kommunikationskanal verwendet. Dadurch wird zwar ein Bit der Adressenübermittlung geopfert, die Arbitrierung wird aber im Durchschnitt beschleunigt. Von Vorteil ist dabei, dass in Situationen, in denen die potentiell unterlegenen Kommunikationsteilnehmer aufgrund von Signalüberlagerung noch nicht eindeutig entscheiden können, ob sie unterliegen werden, durch die Signalisierung seitens des potentiellen Gewinners das Arbitrierungsverfahren abkürzbar ist, insbesondere wenn ein Verfahren eingesetzt wird, bei dem jede Ziffer der Adresse mehrfach bis zu einer endgültigen Klärung gesendet wird. Somit bedingt zwar der Verlust eines Adressbits an den reservierten Kanal vorerst eine Verlängerung der Adressen, also eine Erhöhung der Anzahl der Ziffern, aus denen jede Adresse zusammengesetzt ist, dies wird jedoch ausgeglichen dadurch, dass weniger Wiederholungen zur Arbitration einer einzelnen Ziffer nötig sind.

Bei einer vorteilhaften Ausgestaltung sind die übertragenen Signale sinusförmig oder ergeben sich aus einer Überlagerung von sinusförmigen Signalen, wobei die Zahl der überlagerten sinusförmigen Signale kleiner als die oder gleich der Zahl der Kommunikationskanäle ist. Sinusförmige Signale sind besonders vorteilhaft im OFDM-Verfahren einsetzbar und erlauben überdies eine verzerrungsarme Datenübertragung über induktive Kopplungen hinweg. Durch die Verzerrungsarmut ist die Fehlerrat der Datenübertragung bei der Arbitration verringert.

Alternativ werden statt der sinusförmigen Signale allgemein Wavelets, beispielsweise Haar-Wavelet, Daubechies-Wavelets, Coiflet-Wavelets und Meyer-Wavelets, zur Überlagerung verwendet. Durch die geringe zeitliche Streuung oder die zeitliche Lokalisierung in einem kurzen Zeitabschnitt gegenüber den zeitlich unbegrenzten sinusförmigen Signalen sind hier Verzerrungen beim Übertragungsbeginn und Übertragungsende verringert.

Bei einer vorteilhaften Ausgestaltung wird jedes Signal im Wesentlichen über die zeitliche Dauer eines Taktsegments auf den Bus übertragen, die Symboldauer jeder übertragenen Informationseinheit gleicht somit im Wesentlichen der zeitlichen Dauer eines Taktsegments, wobei Abweichungen der beiden Zeitdauern voneinander in der Größenordnung der Dauer von Einschwingvorgängen der Signale akzeptabel sind. Somit ist genügend Zeit verfügbar, in der beispielsweise ein Signal fehlerarm über eine induktive Kopplungsstelle im Übertragungsweg übermittelt werden kann. Der Bustakt bestimmt somit den Fortschritt und damit auch die maximale Dauer einer Arbitrationsvorgangs, wodurch die benötigte Zeit für eine Informationsübermittlung besser abschätzbar ist. Ein Teilnehmer mit niedriger Priorität kann nur mit dem Ablauf eines Taktsegments ausscheiden, und eine Kommunikationsaufnahme kann nur mit dem Beginn eines Taktsegments erfolgen. Durch diese Taktung treten Kollisionen, die eine Arbitration erforderlich machen, häufig auf, und das erfindungsgemäße Verfahren beschreibt eine zweckmäßige Routine, derartige Konflikte zur schlichten.

Bei einer vorteilhaften Ausgestaltung identifiziert die dem Teilnehmer zugewiesene Nummer oder Folge von Identifikationseinheiten diesen eindeutig, wobei auf der Menge aller Teilnehmern zugewiesenen Nummern oder Folge von Identifikationseinheiten und/oder auf den Ziffern der Nummern oder den Identifikationseinheiten eine Ordnungsrelation erklärt ist, gemäß welcher der Begriff höhere Nummer verwendet wird. Vorzugsweise ist auf den Ziffern der Nummern oder den Identifikationseinheiten eine Ordnungsrelation vorgegeben, aus der die Ordnungsrelation auf der Menge aller Teilnehmern zugewiesenen Nummern oder Folge von Identifikationseinheiten resultiert. Von Vorteil ist dabei, dass die Nummer oder die Folge von Identffikationseinheiten als Platzhalter für die ansonsten frei wählbare Bezeichnung eines jeden Teilnehmers verwendbar ist, wobei die natürlich gegebene Ordnungsrelation auf den natürlichen Zahlen als Prioritätsrangfolge verfügbar ist. Von Vorteil ist weiterhin, dass die Arbitration zifferwelse oder Identifikationseinheitsweise erfolgen kann. Somit skaliert die Zahl der benötigten Kommunikationskanäle nicht mit der Zahl der Teilnehmer. Lediglich die Dauer der Arbitrationsphase verlängert sich, wenn sich die Zahl der Teilnehmer erhöht. Es Ist somit eine Vielzahl von Teilnehmer bei einer begrenzten Zahl von Kommunikationskanälen vorsehbar.

Bei einer vorteilhaften Ausgestaltung ist die dem Teilnehmer zugewiesene Nummer oder Folge von Identifikationseinheiten dessen numerische Adresse, wobei die Ordnungsrelation durch die natürliche Ordnung der Adressen erklärt ist, Von Vorteil ist dabei, dass die Nummernzuordnung und die Vergabe der Priorität einfach, nachvollziehbar und fehlerarm konfigurierbar ist, da die Adresse eines Teilnehmers und die Adressenvergabe an einen Teilnehmer in der Bussystemtechnik einfach handhabbar sind.

Bei einer vorteilhaften Ausgestaltung werden die Nulldurchgänge des Signals für die berührungslose Energieübertragung für die Synchronisation der Kommunikation verwendet, Insbesondere durch Detektion eines Signalpulses, der in zeitlicher Nähe zum Nulldurchgang ausgesendet wird. Somit ist vorteilhaft die Synchronisation der internen Taktung der Teilnehmer mit der Bustaktung durchführbar.

Bei einer vorteilhaften Ausgestaltung umfasst mindestens ein Kommunikationskanal mehrere Unterkanäle, wobei die Kommunikationsteilnehmer die für einen Kommunikationskanal bestimmten Signale als Signale mit relativer, zufällig bestimmter Phasenverschiebung auf den Unterkanalen des Kommunikationskanals senden. Somit Ist vorteilhaft durch Redundanz eine verminderte Fehlerrate erreichbar.

Dabei sind diese Unterkanäle also für sich genommen ebenfalls Kommunikationskanäle, werden jedoch hierarchisch zusammengefasst zu Gruppen, die jeweils einen Kommunikationskanal definieren. Mit anderen Worten sind die einem Kommunikationskanal zugeordneten Unterkanäle In ihrer Verwendung, also simultanen Belegungsmöglichkeit mit Signalen, nicht völlig unabhängig voneinander, sondern es bestehen durch die beabsichtigte Redundanz der Signalübertagung verursachte Korrelationen oder Nebenbedingungen, während Unterkanäle zu verschiedenen Kommunikationskanälen in ihrer Verwendung unabhängig voneinander sind.

Bei einer vorteilhaften Ausgestaltung wird ein Kommunikationskanal von einem Kommunikationsteilnehmer als mit einem Signal beaufschlagt gewertet, wenn auf mindestens einem der Unterkanäle des Kommunikationskanals ein Signal detektiert wird. Von Vorteil ist dabei, dass auf einfache und robuste Weise die bereitgestellte Redundanz zur Verminderung der Fehlerrate, insbesondere zur Vermeidung von Übertragungsfehlern aufgrund von zufalliger destruktiver Interferenz, verwendbar ist.

Bei einer vorteilhaften Ausgestaltung werden die Signale auf den Kommunikationskanälen oder Unterkanälen des Leiters unter Verwendung eines OFDM-Verfahrens übermittelit. Von Vorteil ist dabei, dass für das OFDM-Verfahren ein Verfahren zur Busarbitration bereitgestellt wird, das alle Kommunikationskanäle des OFDM-Verfahrens nutzt und somit mit dem OFDM-Verfahren kompatibel ist.

Bei einer vorteilhaften Ausgestaltung liegen die Frequenzen der Kommunikationskanäle nicht in der Obertonreihe der berührungslosen Energieübertragung oder zumindest nicht in der Menge der ersten drei harmonischen Obertöne des Signals der berührungslosen Energieübertragung. Somit wird vorteilhaft störende Einkopplung der berührungslosen Energieübertragung in die Signalübertragung reduziert. Störungen mit einem Vielfachen der Grundfrequenz der berührungslosen Energieübertragung ergeben sich beispielsweise durch Vorgänge in der Einspeiseelektronik der berührungslosen Energieübertragung oder Rückwirkung der Verbraucher.

Bei einer vorteilhaften Ausgestaltung liegen die Frequenzen der Kommunikationskanäle in der Obertonreihe einer Grundfrequenz. Somit ist die redundante Übertragung der Signale auf Unterkanälen mittels relativer Phasenverschiebung mehrerer Signale vorteilhaft ausführbar.

Bei einer vorteilhaften Ausgestaltung werden Nutzdaten mittels FFT und/oder IFFT umgewandelt zur Weitergabe und/oder zum Empfang auf den beziehungsweise vom Bus, insbesondere zur Datenübertragung Im OFDM-Verfahren. Von Vorteil ist dabei, dass eine schnelle Umwandlung der binär von einem Bus übermittelten Daten in ein für das OFDM-Verfahren nutzbares Format durchführbar ist.

Bei einer vorteilhaften Ausgestaltung sind die Kommunikationsteilnehmer Antriebsaggregate, insbesondere Umrichtermotoren oder Anpasssteller zur Versorgung von Verbrauchern. Von Vorteil ist dabei, dass ein OFDM-Verfahren mit einer Anlage mit berührungsloser Energieversorgung kombinierbar ist. Vorteilhaft ist dabei, dass die Zeitkonstante des OFDM-Verfahrens, also die Zeitdauer der Signalwörter, in etwa gleichgroß oder größer wählbar ist wie oder als die Zeitkonstante von Reflexionen im Primärleiter der Anlage. Da das OFDM-Verfahren sinusförmige Signale verwendet, ist eine fehlerhafte Interpretation eines Echos als zusätzliches Signal oder als zusätzliche Information vermeidbar. Vorteilhaft sind somit Leitungsabschlüsse für die Signalübertragung einsparbar. Die Verwendung des OFDM-Verfahrens bei Anlagen mit berührungsloser Energieübertragung ist weiter vorteilhaft, weil die sinusförmigen Signale im Vergleich zu rechteckförmigen Signalen, also Pulsen, mit verminderter Signalverfälschung induktiv in den Primärleiter einkoppelbar sind.

Wichtige Merkmale der Erfindung einer Vorrichtung zur Buskommunikation sind in Anspruch 13 angegeben. Insbesondere ist somit vorgesehen, dass mehrere Kommunikationsteilnehmer an einen Bus angeschlossen sind, wobei die Kommunikationsteilnehmer Mittel zur Arbitration und Kommunikation auf mehreren Frequenzkanälen aufweisen. Von Vorteil ist dabei, dass bei gleichbleibender Übertragungsrate die kommunizierten Signalwörter über eine längere Zeitspanne anliegen. Somit ist die Fehlerrate der Kommunikation verringerbar, und im Übertragungsweg sind induktive Kopplungen, die insbesondere eine Relativbewegung zulassen.

Bei einer vorteilhaften Ausgestaltung werden die Kommunikationsteilnehmer über einen Energiebus versorgt und/oder weisen die Kommunikationsteilnehmer Mittel zur Kommunikation über den Energiebus auf mehreren Frequenzkanälen auf. Somit sind vorteilhaft Leitungen einsparbar.

Bei einer vorteilhaften Ausgestaltung werden die Kommunikationsteilnehmer über einen Energiebus berührungslos versorgt und/oder die Kommunikationsteilnehmer weisen Mittel zur berührungslosen Kommunikation über den Energiebus auf mehreren Frequenzkanälen, Insbesondere im OFDM-Verfahren, auf. Somit sind vorteilhaft Steckverbindungen einsparbar und es ist eine Anlage in hoher Schutzart ausführbar.

Bei einer vorteilhaften Ausgestaltung weisen die Kommunikationsteilnehmer Mittel zur Bestimmung der Nulldurchgänge des Signals für die berührungslose Energieübertragung auf. Somit ist eine Synchronisierung der Zeitsegmente oder Zeittaktung des verwendeten Kommunikationsverfahrens, etwa eines OFDM-Verfahrens, durchführbar.

Bei einer vorteilhaften Ausgestaltung sind Mittel für die Erzeugung einer Phasenverschiebung von zufälliger Größe zwischen zwei Signalen vorhanden. Somit ist ein Verfahren zur Vermeidung von Übertragungsfehler mittels redundanter Signalübermittlung einsetzbar.

Bei einer vorteilhaften Ausgestaltung sind Mittel zur Datenumwandlung mittels FFT und/oder IFFT vorhanden. Somit ist eine schnelle Umwandlung der Nutzdaten in das Format des Bussystems durchführbar.

Bei einer vorteilhaften Ausgestaltung weist die Vorrichtung Mittel zur berührungslosen Energieentnahme aus einem Primärleiter auf und/oder es sind Mittel zur berührungslosen Energieversorgung vorhanden. Somit sind die Vorzüge berührungsloser Energieversorgung mit den Vorzügen der Mehrträger-Arbitration kombinierbar. Insbesondere ist der Primärleiter zur Datenkommunikation nutzbar.

Bei einer Anwendung der Erfindung bei einem Umrichters ist vorgesehen, dass Mittel zum Senden und/oder zum Empfang von Daten im OFDM-Verfahren vorhanden sind, wobei ein Verfahren zur Busarbitration nach mindestens einem der vorangegangenen Ansprüche in dem Umrichter ausführbar ist. Somit ist bei dem Umrichter das Verfahren zur Busarbitration für OFDM-Verfahren vorteilhaft einsetzbar, Insbesondere ist somit der Umrichter nach Art eines Moduls in eine Anlage mit Buskommunikation integrierbar.

Bei einer Anwendung der Erfindung bei einer Fertigungsanlage ist vorgesehen, dass Antriebseinheiten berührungslos energieversorgt sind und dass über einen Bus zumindest zwischen den Antriebseinheiten Daten austauschbar sind, wobei die Antriebseinheiten Mittel zur Durchführung eines erfindungsgemäßen Verfahrens aufweist, und/oder wobei die Antriebseinheiten jeweils eine erfindungsgemäße Vorrichtung zur Buskommunikation umfassen. Von Vorteil ist dabei, dass eine Fertigungsanlage ausbildbar ist, bei der die Vorzüge der berührungslosen Energieversorgung mit denen eines Datenaustauschs über ein Bussystem kombinierbar sind. Die Antriebseinheiten bilden somit mit dem Bus ein Bussystem.

Die Erfindung ist besonders vorteilhaft einsetzbar bei Multimaster-Bussystemen, insbesondere bei FlexRay, Ethernet, CAN. Foundation Fieldbus, PROFIBUS, Interbus oder bei Mehrträger-Modulationsverfahren.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

### Bezugszeichenliste

- 11, 12, 13, 14: Verbraucher
- 15: Energiequelle
- 16: Primärleiter
- 120: Verbraucher
- 122: Kommunikationskanal
- 124: Signalkopplung
- 126: Datenübermittlung
- 130: Verbraucher
- 132.1-132.4: Kommunikationskanal
- 134: Signalkopplung
- 136: Datenübermittlung
- 301: Modem
- 302: Datenquelle
- 303: Datensenke
- 304,: 305 Puffer
- 306: Buscontroller
- 308: Mittel zur Frequenzzuordnung
- 309: Zufalls-Phasengenerator
- 310: Enable-Signal
- 311: Amplitudenauswerteeinheit
- 312: Mittel zur inversen schnellen Fourier-Transformation (IFFT)
- 313: Mittel zur schnellen Fourier-Transformation (FFT)
- 314: Parallel-Seriell-Wandler
- 315: Seriell-Parallel-Wandler
- 316: Digital-Analog-Wandler
- 317: Analog-Digital-Wandler
- 401, 402: Teilnehmer
- 403: Übertragungsbeginn
- 404: Identifikation
- 405: Übertragungsende
- 410: Nutzdaten
- 411: Adressrahmen
- 412: Datenpaket
- 420: Fehlerprüfinformation
- 430: Zuhör-Modus
- 500: Mittelfrequentes Signal
- 501: erster Teilnehmer
- 502: zweiter Teilnehmer
- 503: dritter Teilnehmer
- 504: Identifikation
- 508: Sendebeginn
- 509: Übertragungsende
- 510: Nutzdaten
- 511: Adressrahmen
- 512: Datenrahmen
- 520: Fehlerprüfinformation
- 530: Zuhör-Modus
- 601-605: Signale
- 606: resultierendes Signal
- 607: überwachbarer Bereich
- 608: blinder Bereich

Die Erfindung wird nun anhand von Abbildungen näher erläutert:

Es zeigt
- Figur 1 eine Anlage zur berührungslosen Energieversorgung beweglicher Verbraucher,
- Figur 2 das genutzte Frequenzspektrum im OFDM-Verfahren,
- Figur 3 die Funktionsbestandteile eines Modems zum Senden und Empfangen von Daten über das OFDM-Verfahren,
- Figur 4 ein Arbitrationsverfahren bei Nutzung eines Kommunikationskanals,
- Figur 6 ein Arbitrationsverfahren bei Nutzung mehrerer Kommunikationskanäle,

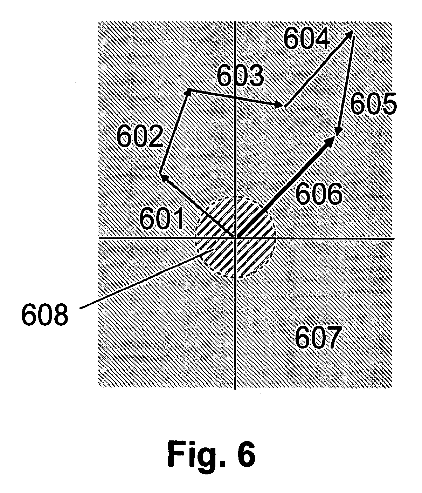

- Figur 6 die Interferenz von verschiedenen Signalen auf einem Kommunikationskanal,

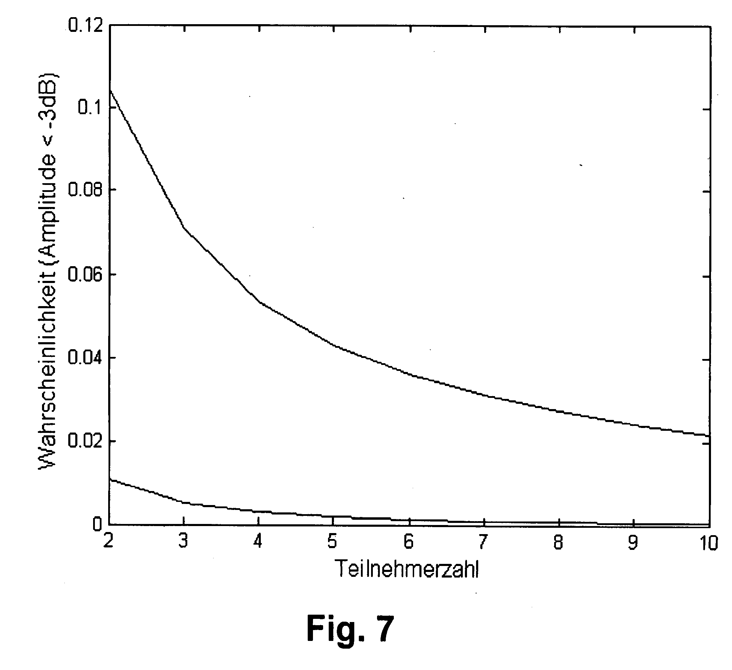

- Figur 7 die Abhängigkeit der Übertragungsfehler-Rate von der Zahl der Teilnehmer bei einem erfindungsgemäßen Arbitrationsverfahren,

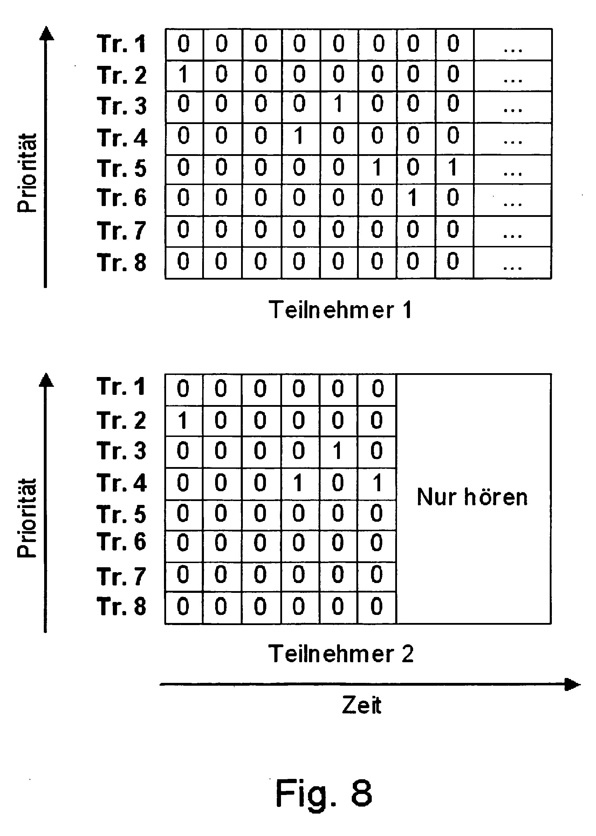

- Figur 8 einen Arbitrationsvorgang zwischen zwei Teilnehmern unter Verwendung von acht Kommunikationskanälen,

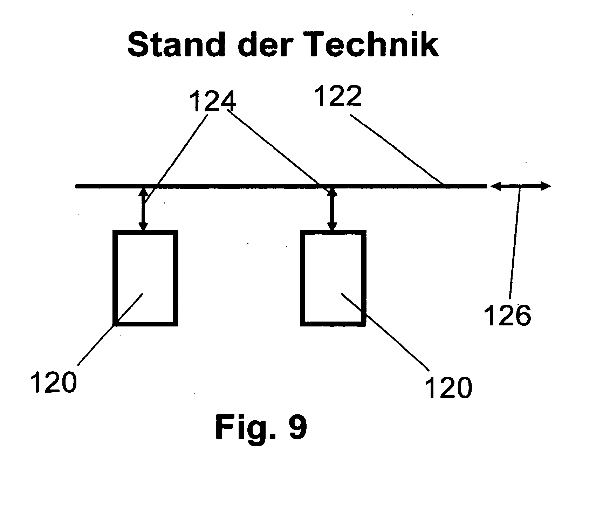

- Figur 9 die Kommunikation von Verbrauchern über einen einzigen Kommunikationskanal,

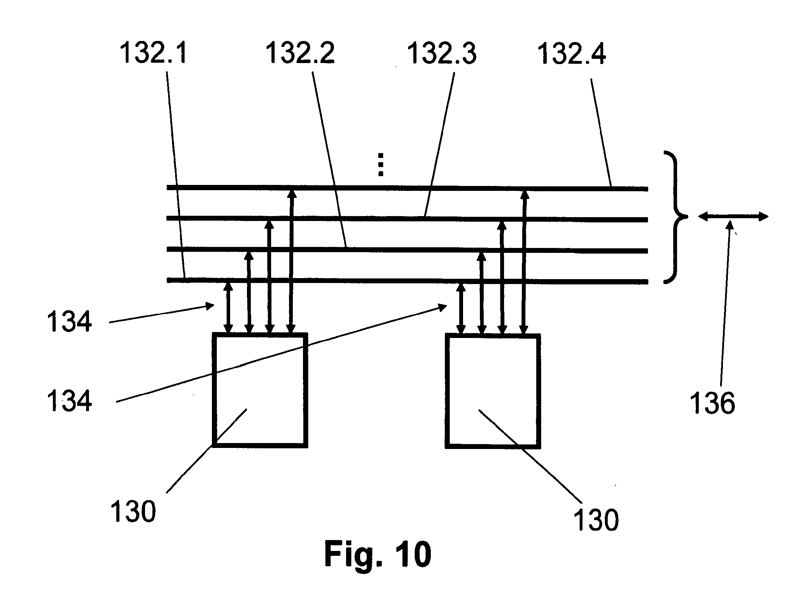

- Figur 10 die erfindungsgemäße Kommunikation von Verbrauchern über mehrere Kommunikationskanäle,

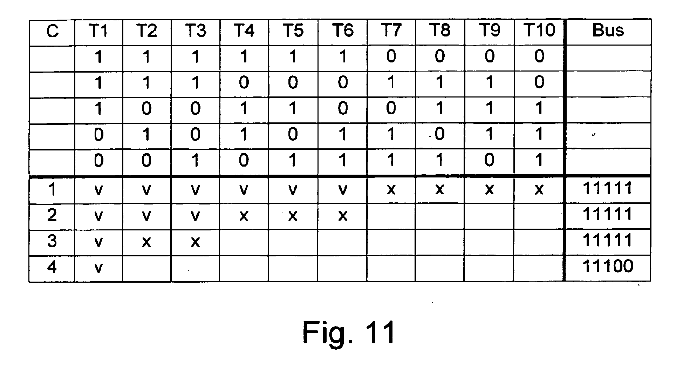

- Figur 11 ein alternatives Arbitrationsverfahren bei Nutzung mehrerer Kommunikationskanäle,

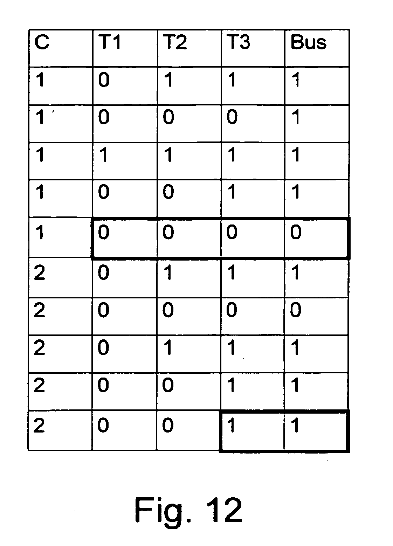

- Figur 12 ein alternatives Arbitrationsverfahren bei Nutzung mehrerer Kommunikationskanäle mit einem Gewinner-Bit.

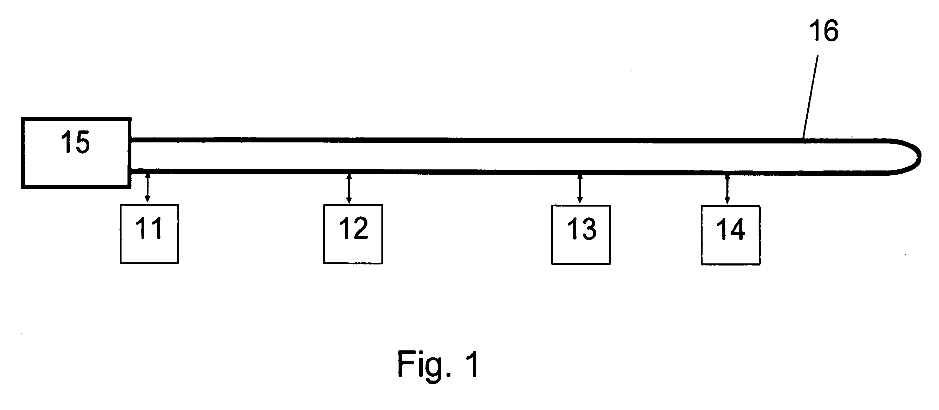

In der Figur 1 ist eine Anlage zur berührungslosen Energieversorgung mehrerer beweglicher Verbraucher 11, 12, 13, 14 aus einer Energiequelle 15 gezeigt. Die Energiequelle 15 prägt auf einen Primärleiter 16 einen konstanten mittelfrequenten Strom von 25 kHz auf, der induktiv an Sekundärspulen der Verbraucher 11-14 über eine schwache, resonante Kopplung Energie überträgt. Als Verbraucher 11-14 sind beispielsweise Umrichtermotoren vorgesehen. An den Sekundärspulen sind zur Energiekopplung Kondensatoren seriell oder parallel derart geschaltet, dass die Resonanzfrequenz in etwa gleich der Frequenz des mittelfrequenten Stromes ist. Vorteilhaft wird hierzu 25 kHz gewählt.

An der Energieversorgung 15 sind weitere Mittel zur Datenauf- und demodulation auf den Primärleiter 16 vorgesehen. Die Verbraucher 11-14 verfügen über ebensolche Mittel und kommunizieren über den Primärleiter 16 und die an der Energieversorgung 15 vorgesehenen Mittel.

Diese Kommunikation erfolgt über das OFDM-Verfahren, bei dem mehrere Kommunikationskanäle mit unterschiedlichen Frequenzen gleichzeitig genutzt werden. Unter Kommunikationskanal wird in dieser Schrift ein Kanal im informationstheoretischen Sinne verstanden. Jeder Kommunikationskanal benutzt zur Übertragung ein Medium, das beispielsweise als ein Frequenzband elektromagnetischer Wellen in Luft oder einem metallischem Leiter, als ein optischer Leiter oder als ein separater metallischer Leiter ausgebildet sein kann. Weitere Medien zur Übertragung von Signalen sind bekannt und für die Erfindung verwendbar. Über diese Kanäle werden Signale in Form von sinusförmigen Wellenpaketen übermittelt.

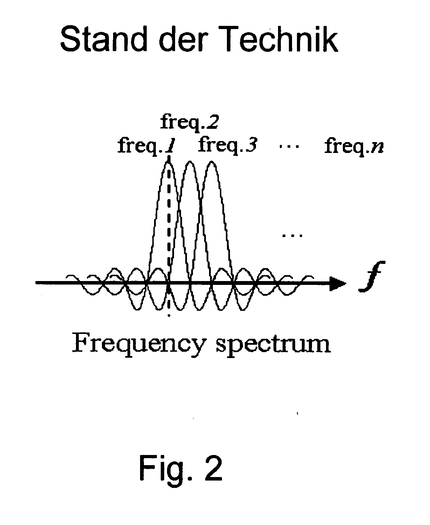

Figur 2 zeigt den Realteil des für jeden Kanal genutzten Frequenzspektrums. Die gestrichelte Linie markiert die Mittenfrequenz des ersten Kanals, also die hauptsächlich für die über den ersten Kanal übermittelten Signale verwendete Frequenz. Die Frequenzspektren aller anderen Kanäle haben an dieser Stelle keinen Anteil, wodurch sich die einzelnen Kanäle trennen lassen. Orthogonalität ist weiter im mathematischen Sinne auf ein endliches Zeitintervall bezogen. Die Mittenfrequenzen bilden also einen Teil einer Obertonreihe einer Grundfrequenz, sind mit anderen Worten ganzzahlige Vielfache einer Grundfrequenz.

In der in Figur 1 beschriebenen Anlage werden 8 Kanäle verwendet. Das Frequenzband zur Datenübertragung erstreckt sich von 75 kHz bis 1200 kHz. Die Frequenzen zur Datenübertragung sind so gewählt, dass sie nicht auf die ersten drei harmonischen Oberschwingungen des mittelfrequenten Stromes fallen. Insbesondere überlappen also die um die jeweiligen Mittenfrequenzen genutzten Frequenzbänder nicht mit den ersten drei harmonischen Oberschwingungen der Grundfrequenz des mittelfrequenten Stromes. Dabei ist ein hinreichender Abstand zwischen den Werten der Frequenzen des mitltelfrequenten Stromes und den Werten der Frequenzbänder der Datenübertragung vorgesehen, sodass eine wechselseitige Beeinflussung, insbesondere ein Einkoppeln von Anteilen des mittelfrequenten Stromes in die Datenübertragung, reduziert ist.

Die Längenverhältnisse sind bei der Anlage nach Figur 1 dergestalt, dass die Verbraucher 11-14 die OFDM-Signale als Nahfeld-Signale empfangen. Signal-Laufzeiten sind daher näherungsweise als verschwindend, Signal-Wellenlängen als unendlich lang annehmbar.

Bei weiteren erfindungsgemäßen Ausführungsbeispielen beträgt die Länge des Primärteiters ein Vielfaches, insbesondere mehr als ein Zehnfaches, der maximalen Wellenlänge der OFDM-Signale.

Figur 9 zeigt schematisch die Kommunikation von Verbrauchern 120 über einen einzigen Kommunikationskanal 122 nach dem Stand der Technik. Dieser Kommunikationskanal ist als Busleitung, also als Kabel, ausgebildet. Die Verbraucher 120 geben und empfangen über eine Signalkopplung 124 Daten an und aus dem Kommunikationskanal 122. Diese Signalkopplung 124 beruht auf einer induktiven Kopplung oder auf einer Kopplung über einen elektrischen Steckkontakt.

Die Verbraucher 120 kommunizieren auf diese Weise miteinander oder über eine Datenübermittlung 126 mit einer nicht gezeigten zentralen Steuerung oder einem weiteren Bus.

Figur 10 zeigt schematisch eine erfindungsgemäße Ausführung der Kommunikation mehrerer Verbraucher 130 über Kommunikationskanäle 132.1-132.4. Die Verbraucher 130 sind jeweils über eine Signalkopplung 134 an die Kommunikationskanäle 132.1-132.4 angeschlossen. Die Kommunikationskanäle sind als reservierte Frequenzbänder in einem Träger ausgebildet und stellen somit Subträger dar. Der Träger ist durch einen metallischen Leiter, beispielsweise einen Draht, ein Kabel oder eine Leitung, realisiert. Die Signalkopplung 134 erfolgt physikalisch induktiv. Die Verbraucher 130 kommunizieren über die Kommunikationskanäle 132.1-132.4 miteinander oder über eine Datenübermittlung 136 mit einer nicht gezeigten zentralen Steuerung oder einem ebenfalls nicht gezeigten weiteren Bus.

In weiteren erfindungsgemäßen Ausführungsbeispielen werden mehr als die gezeigte Zahl von Kommunikationskanälen 132.1-132.4 benutzt. Dies wird in Figur 10 durch Punkte verdeutlicht.

In weiteren erfindungsgemäßen Ausführungsbeispielen erfolgt die Signalkopplung 134 physikalisch kapazitiv oder galvanisch.

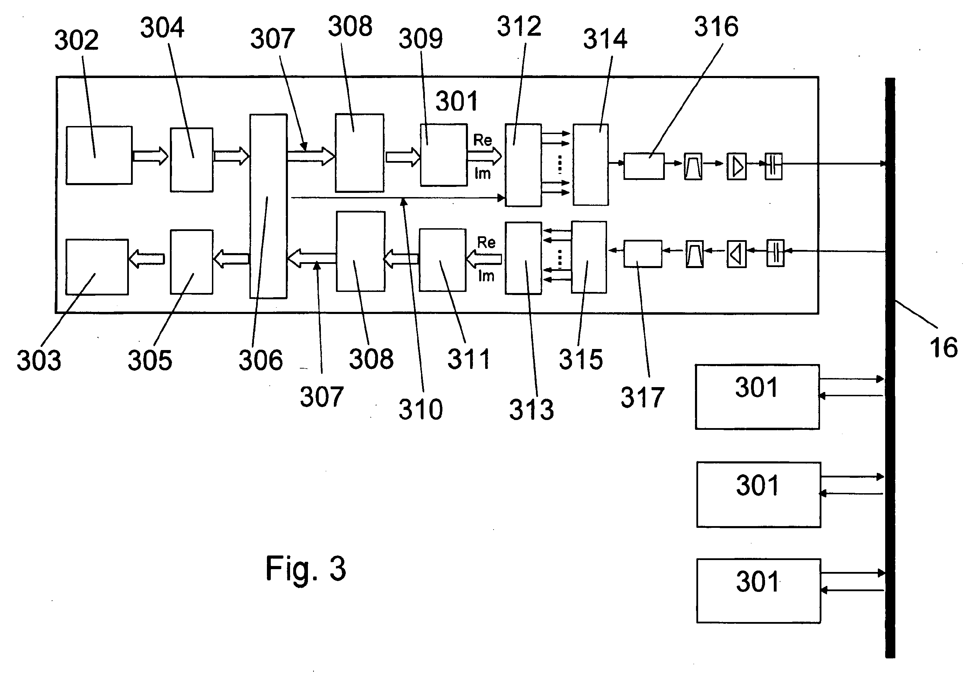

Figur 3 zeigt symbolisch ein Modem 301, dass an einen Primärleiter 16 angeschlossen ist zum Datenempfang und versand. Ein solches Modem 301 ist in jeden der in Figur 1 gezeigten Verbraucher 11-14 integriert.

Das Modem 301 umfasst eine Datenquelle 302, eine Datensenke 303, Puffer 304, 305, einen Buscontroller 306, Mittel zur Frequenzzuordnung 308, einen Zufalls-Phasengenerator 309, Mittel 312 zur inversen schnellen Fourier-Transformation, abgekürzt IFFT, Mittel 313 zur schnellen Fourier-Transformation, abgekürzt FFT, einen Parallel-Seriell-Wandler 314, einen Seriell-Parallel-Wandler 315, einen Digital-Analog-Wandler 316, einen Analog-Digital-Wandler 317, einen Bandpass, einen Hochpass, Operationsverstärker und Mittel zur galvanischen Entkopplung.

Das Modem operiert wie nachfolgend beschrieben. Aus einer Datenquelle 302 werden über den Puffer 304 Daten an den Buscontroller 306 übergeben. Der Buscontroller 306 übergibt die Daten an die Mittel zur Frequenzzuordnung 308. Der Buscontroller 306 steuert und überwacht auch die Arbitrationsphase. Die Mittel zur Frequenzzuordnung 308 stellen die Daten derjenigen Zahlendarstellung dar, deren Basis der Zahl der verwendeten Übertragungskanäle gleicht. Die ermittelte Zahlendarstellung wird zifferweise in Pfeilrichtung weitergegeben. Der Buscontroller betätigt über ein Enable-Signal 310 den Zufalls-Phasengenerator 309, der eine relative Phasenverschiebung für die beiden Kopien der von dem Mittel zur Frequenzerzeugung 308 übermittelten Ziffern ermittelt. Diese Verdopplung des Signals mit relativer Phasenverschiebung erhöht die Redundanz der Datenübertragung und reduziert so die Ausfallrate. Die Ziffern und die Phasenverschiebung werden an ein Mittel zur IFFT 313 zu Überlagerungen von sinusförmigen Signalen gemäß den Ziffern zusammengesetzt. Diese sinusförmigen Signale werden in einem Parallel-Seriell-Wandler 314 in ein zeitlich veränderliches Signal umgesetzt und über einen Digital-Analog-Wandler 316, einen Hochpass, einen Operationsverstärker und ein galvanisches Entkopplungselement auf den Bus 16 weitergegeben. Der Bus 16 ist als HF-Litze ausgeführt, also als vieladriges Kabel, wobei die einzelnen Kabeladern gegeneinander isoliert sind. Der Bereich ab dem Mittel zur Frequenzzuordnung 308 bis zum Bus 16 stellt somit den Bereich dar, in dem das OFDM-Verfahren realisiert wird.

Umgekehrt empfängt das Modem 301 über ein galvanisches Entkopplungselement, einen Operationsverstärker, einen Bandpass, der insbesondere hochfrequente Störungen und das mittelfrequente Energiesignal abtrennt, und einen Analog-Digital-Wandler 317 zeitlich veränderliche Signale, die über einen Seriell-Paraltel-Wandler 315 und Mittel zur FFT 313 in Zahlen umgewandelt werden. Über eine Amplitudenauswerteeinheit 311 und ein Mittel zur Frequenzzuordnung 308 wird aus der übermittelten Zahlenfolge eine Zahl gemäß der Zahlendarstellung, deren Zahlenbasis der Zahl der verwendeten Kanäle gleicht, ermittelt und an den Buscontroller 306 weitergereicht. Der Buscontroller 306 sendet die empfangenen Daten über einen Puffer 305 an eine Datensenke 303.

Bei einem weiteren Ausführungsbeispiel erfolgt die Ein- und Auskopplung von Daten auf beziehungsweise vom Bus 16 nicht wie dargestellt kapazitiv sondern induktiv oder galvanisch mittels Stecker oder mittels Durchdringungsdornen in Durchdringungstechnik.

Bei einem weiteren Ausführungsbeispiel ist der Bus 16 als Litze ausgeführt, bei der die einzelnen Adern elektrisch nicht gegeneinander isoliert sind.

Bei einem weiteren Ausführungsbeispiel ist der Bus 16 durch den physikalischen Raum oder durch Luft gegeben, wobei die Signalübermittlung mittels Funkübertragung erfolgt.

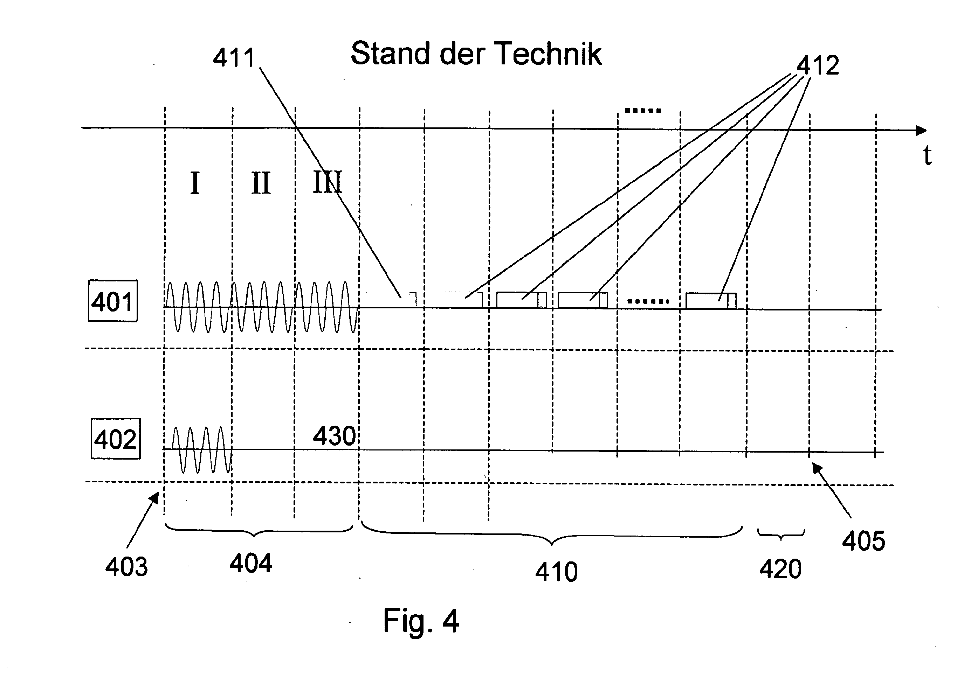

Figur 4 zeigt den Verlauf eines Arbitrationsverfahrens nach dem Stand der Technik, bei dem also nur ein Kommunikationskanal verwendet wird. Dargestellt ist der zeitlich Verlauf der von zwei Teilnehmern 401, 402 gesendeten Signale. Dieser Signalverlauf ist in mit **I,** II, III usw. bezeichnete Zeitsegmente unterteilt, von denen jedes ein Symbol enthält.

Beide Teilnehmer 401, 402 beginnen gleichzeitig bei 403 mit ihrer Identifikation 404, in der jeder Teilnehmer seine binär kodierte Adresse sendet und gleichzeitig den Sendekanal überwacht. Die Identifikation 404 ist auch als Identifier bezeichenbar. Der Übertragungsbeginn 403 und die Identifikation 404 bilden also die Kommunikationsaufnahme eines Teilnehmers.

Im ersten Zeitsegment senden beide Teilnehmer 401, 402 ein Signal, also das Datum "1". Im darauffolgenden Zeitsegment sendet lediglich ein erster Teilnehmer 401 ein Signal, während der zweite Teilnehmer das Datum "0" übermittelt, also kein Signal sendet. Durch die gleichzeitig stattfindende Überwachung des Sendekanals stellt der zweite Teilnehmer 402 fest, dass von einem anderen Teilnehmer ein Signal gesendet wurde. Daraufhin bricht der Teilnehmer 402 seine Sendung ab und wechselt in den Zuhör-Modus 430, also in den listenonly mode. Hierbei ist der Zuhör-Modus 430 ein Zustand des Teilnehmers, in welchem der Teilnehmer den Bus abhört, aber nicht sendet, und wartet, bis der Bus freigegeben ist oder bis der als sendend erkannte Teilnehmer seine Datenübertragung abgeschlossen hat.

Der erste Teilnehmer 401 setzt die Sendung seiner Adresse fort. Nach vollständiger Sendung der Adresse beginnt er, Nutzdaten 410 zu senden, die aus Adressrahmen 411 und Datenpaketen 412 bestehen. Eine Fehlerprüfinformation 420 schließt die Übertragung bei 405 ab.

Beginnen mehr als zwei Teilnehmer gleichzeitig mit dem Senden der Identifikation 404, so werden diese bis auf einen nach und nach gemäß dem beschriebenen Verfahren in den Zuhör-Modus 430 übergehen, da jeder Teilnehmer eindeutig durch seine Adresse identifizierbar ist.

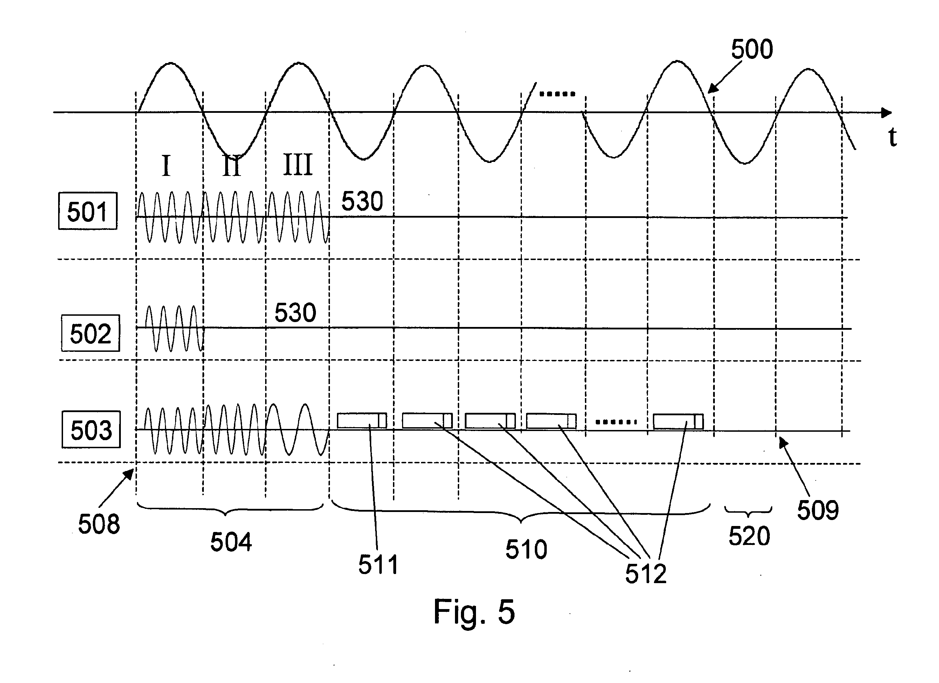

Figur 5 zeigt den Verlauf eines Arbitrationsverfahrens im OFDM-Verfahren gemäß der Erfindung. Es werden acht Kanäle zur Kommunikation verwendet. In der Figur 5 dargestellt ist zuoberst der zeitliche Verlauf des mittelfrequenten Signals 500, darunter die Signalfolge des ersten Teilnehmers 501, des zweiten Teilnehmers 502 und des dritten Teilnehmers 503.

Mit I, II, III sind Zeitsegmente gleicher Zeitdauer bezeichnet, die zeitlich nacheinander durchlaufen werden. Jedes Zeitsegment dient der Übertragung eines Symbols, also einer kleinsten Informationseinheit im Bussystem. Die Folge der Zeitsegmente entspricht somit einer Taktung des Bussystems und einer internen Taktung der Teilnehmer.

Die Nulldurchgänge des mittelfrequenten Signals 500 werden zur Synchronisation der im OFDM-Verfahren in jedem Zeitsegment gesendeten Symbole verwendet, beispielsweise durch Detektion des Nulldurchganges oder eines Synchronisationspulses, der in zeitlicher Nähe zum Nulldurchgang ausgesendet wird, also wenn der Momentan-Betrag des mittelfrequenten Signals 500 unter einem kritischen Wert liegt.

Durch diese Synchronisation wird bewirkt, dass die Teilnehmer 501-503 zu gleichen Zeitpunkten synchron den Beginn jedes neuen Zeitsegments erfassen. Somit wird die interne Taktung jedes Teilnehmers 501-503 mit der Taktung des Bussystems synchronisiert.

Die Kommunikationsteilnehmer 501-503 verfügen über interne Uhren, die regelmäßig auf die beschrieben Weise synchronisiert werden. Die Synchronisation erfolgt dabei immer dann, wenn das Ende eines Zeitsegments auf den Bereich um einen Nulldurchgang des mittelfrequenten Signals fällt.

Ein Verfahren und eine Vorrichtung zur Synchronisation unter Verwendung des Nulldurchganges ist aus der DE 103 49 242 B3 bekannt. Die Gegenstände dieser Schrift sind Bestandteil von Ausführungsbeispielen der Erfindung.

Die drei Teilnehmer beginnen gleichzeitig bei 506 mit der Identifikation, indem sie ihre zur Zahlenbasis neun kodierte Adresse zifferweise senden. Dazu senden sie Wellenpakete unterschiedlicher Frequenz aus. Gleichzeitig werden die Kanäle, auf denen kein Signal gesendet wird, überwacht.

In einem ersten Zeitsegment senden alle drei Teilnehmer (501, 502, 503) ein Signal, die erste Identifikationseinheit, auf demselben Kanal. Keiner der drei Teilnehmer bemerkt einen weiteren Teilnehmer, da alle dasselbe Signal senden.

Alle drei Teilnehmer (501, 502, 503) haben in dem nicht dargestellten Zeitsegment unmittelbar vor dem ersten Zeitsegment den Bus überwacht und geprüft, ob ein weiterer Teilnehmer bereits sendet. Das Senden des Signals im ersten Zeitsegment erfolgte, weil kein weiterer Teilnehmer bereits sendete.

In einem zweiten Zeitsegment senden der erste Teilnehmer 501 und der dritte Teilnehmer 503 ein Signal, die nächstfolgende Identifikationseinheit, auf demselben Kanal, während der zweite Teilnehmer 502 nicht sendet. Folglich detektiert der zweite Teilnehmer 502, dass noch weitere Teilnehmer senden, und wechselt in den Zuhör-Modus 530. Der erste Teilnehmer 501 und der dritte Teilnehmer 503 bemerken jeweils keinen weiteren Teilnehmer, da ihr gesendetes Signal mit den detektierten Signalen übereinstimmt.

In einem dritten Zeitabschnitt sendet der erste Teilnehmer 501 ein Signal auf einem Kanal höherer Mittenfrequenz als der Teilnehmer 503. Der erste Teilnehmer 501 detektiert also, dass ein weiterer Teilnehmer sendet. Da dem vom dritten Teilnehmer 503 benutzten Kanal, eine höhere Priorität zugewiesen ist als dem vom ersten Teilnehmer 501, wechselt der erste Teilnehmer 501 in den Zuhör-Modus 530.

Die zur Bestimmung der Priorität verwendete Ordnungsrelation der Kommunikationskanäle ist also wie folgt: Ein erster Teilnehmer hat eine höhere Priorität als ein zweiter Teilnehmer, wenn er auf einem Kanal niedrigerer Frequenz als der zweite Teilnehmer sendet. Ein Teilnehmer hat eine niedrigere Priorität als ein zweiter Teilnehmer, wenn er nicht sendet und der zweite Teilnehmer überhaupt auf einem Kanal sendet.

Nach abgeschlossener Identifikation beginnt der dritte Teilnehmer 503 mit dem Senden von Nutzdaten 510, die sich aus Adressrahmen 511 und Datenrahmen 512 zusammensetzen. Eine Fehlerprüfinformation 520 schließt bei 509 die Übertragung ab.

Diese Fehlerprüfinformation 520 umfasst bei einer Weiterbildung auch die Information, dass die Übertragung abgeschlossen ist. Durch diese Information wird ein Teilnehmer Im Zuhör-Modus 530 veranlasst, einen neuen Sendeversuch zu starten.

Bei weiteren Ausführungsbeispielen wechseln die Teilnehmer 501, 502 jeweils nicht in den Zuhör-Modus 530, sondern in einen Warte-Modus. Nach Ablauf einer festgelegten Zeitspanne oder einer festgelegten Anzahl von Zeitsegmenten beginnen die Teilnehmer 501, 502 erneut mit dem Senden ihrer Identifikation.

Bei weiteren Ausführungsbeispielen werden 16, 32, 52 oder 88 Kanäle oder mehr verwendet. Das für die Datenübertragung reservierte Frequenzband liegt zwischen 50 kHz und 20 GHz, Insbesondere zwischen 75 kHz und 5 GHz

Bei der Überwachung der Kanäle besteht die Möglichkeit, dass sich ein Teilnehmer im Knoten des von einem anderen Teilnehmer ausgesendeten Signals befindet, oder dass sich bei einem Teilnehmer die von anderen Teilnehmern auf demselben Kanal ausgesendeten Signale auslöschen.

Figur 6 zeigt die Interferenz von sinusförmigen Signalen 601-605, die von verschiedenen Teilnehmern auf demselben Kanal gesendet wurden. Dargestellt ist als jeweils die Amplitude und Phase eines jeden Signals als Vektor. Die einzelnen Vektoren sind zur Vektoraddition verschoben. Das aus der Interferenz resultierende Signal ist durch den Vektor 606 repräsentiert. Ein Teilnehmer erkennt ein Signal, wenn dessen Vektor 606 in den überwachbaren Bereich 607, also außerhalb des blinden Bereichs 608 zeigt. Die Winkel der einzelnen Vektoren 601-605 repräsentieren Phasenverschiebungen, die sich durch die Ankopplung der Verbraucher 11-14 in Fig. 1 an den Primärleiter, beispielsweise durch Abänderung der Induktivität der Einkoppelspule aufgrund einer von einer Soll-Anordnung abweichenden Montageanordnung, durch die Verlegung des Primärleiters und das Vorhandensein von zusätzlichen Verbrauchern 11-14 und/oder Induktivitäten entlang der Übertragungsstrecke im Primärleiter 16 ergeben. Auch Laufzeiteffekte der Signale im Primärleiter 16 spielen hier eine Rolle bei entsprechend langen Primärleitern 16.

Figur 7 zeigt in der oberen Kurve das Ergebnis der Simulation der Ausfallsrate als Funktion der Zahl der Teilnehmer, wobei als Ausfall gewertet wird, wenn durch Interferenz die Signalamplitude kleiner als -3dB ist.

Bei dem erfindungsgemäßen Verfahren ist jeder Kanal unterteilt in zwei Unterkanäle. Jeder Teilnehmer (11-14, 601-605), der ein Signal auf einem Kanal senden will, sendet dieses Signal auf jedem der beiden zugehörigen Unterkanäle, jedoch mit einer zufällig bestimmten relativen Phasenverschiebung. Mit relativer Phasenverschiebung ist eine Differenz der Anfangsphasen der auf den Unterkanälen ausgesendeten sinusförmigen Signale zu verstehen, also der Phasenwinkel zwischen den Auslenkungen der sinusförmigen Signale zu Beginn des entsprechenden Zeitsegments. Bei der im Zusammenhang mit Figur 5 erwähnten Überwachung der Kanäle werden gleichzeitig jeweils beide Unterkanäle ausgewertet. Ein Signal wird auf einem Kanal erkannt, wenn es auf mindestens einem Unterkanal erkannt wurde. Es wird also eine logische ODER-Verknüpfung der Signale der Unterkanäle realisiert. Somit ist die Wahrscheinlichkeit einer fehlerhaften Auswertung durch zufällige destruktive Interferenz bei einem Teilnehmer (11-14, 601-605) weiter reduziert, und es ergibt sich als Ergebnis einer Simulation die untere Kurve in Figur 7. Mit anderen Worten ist durch die Verwendung einer zufällig bestimmten, relativen Verschiebung der Anfangsphasen im Falle destruktiver Interferenz auf einem Unterkanal die Wahrscheinlichkeit des Auftretens von destruktiver Interferenz auf dem jeweils anderen Unterkanal reduziert. Der Unterkanal mit destruktiver Interferenz dient in diesem Fall als Referenz für den anderen Unterkanal, und die zufällig bestimmten Phasenverschiebungen bewirken jeweils eine Phasenverschiebung auf dem anderen Unterkanal, die in nicht-destruktive Überlagerung resultiert.

Bei einem weiteren Ausführungsbeispiel wird bei dem beschriebenen Verfahren besonders vorteilhaft ausgenutzt, dass die Unterkanäle durch zugewiesene Frequenzen und zugehörige Frequenzbänder realisiert sind, deren Werte einen gemeinsamen Teiler aufweisen.

Ein Verfahren und eine Vorrichtung zur Erzeugung von Phasenverschiebungen bei Mehrträger-Modulationsverfahren ist aus der deutschen Patentanmeldung DE 10 2006 010 900.7 bekannt. Die Gegenstände dieser Schrift sind Bestandteil von Ausführungsbeispielen der Erfindung.

Figur 8 zeigt den Verlauf einer Arbitration, wie er im Buscontroller 306 abgebildet wird. Dargestellt ist der zeitliche Verlauf der Kanalbelegungen (Tr. 1 bis Tr. 8) zweier Teilnehmer, wobei die Kanäle in einer vorher festgelegten Prioritätsreihenfolge angeordnet sind. Die einzelnen Spalten der dargestellten Tabelle entsprechen den Zeitsegmenten der Bustaktung. Ein Eintrag "1" bedeutet, dass in dem entsprechenden Kanal im entsprechenden Zeitsegment ein Signal gesendet wird, ein Eintrag "0" bedeutet, dass kein Signal gesendet wird. Beide Teilnehmer nehmen in der Überwachung die Oder-Verknüpfung beider Tabellen war. Im ersten bis fünften Zeitschritt stellt keiner der beiden Teilnehmer fest, dass ein weiterer Teilnehmer gesendet hat. Im sechsten Zeitschritt stellt Teilnehmer 2 fest, dass ein anderer Teilnehmer auf Kanal Nummer 5 gesendet hat. Da dieser Kanal eine höhere Priorität als der selbst verwendete Kanal Nummer 4 hat, wechselt Teilnehmer 2 in den Zuhör-Modus. Zeitgleich stellt Teilnehmer 1 fest, dass ein weiterer Teilnehmer auf Kanal Nummer 4 gesendet hat. Da dieser Kanal eine niedrigere Priorität als der selbst verwendete Kanal hat, setzt Teilnehmer 1 den Sendevorgang fort.

Figur 11 zeigt ein Arbitrationsverfahren zwischen zehn Teilnehmern T1-T10 unter Verwendung von fünf Kommunikationskanälen, bei dem Teilnehmer T1-T10 in den Schritten des Arbitrationsverfahrens jeweils auf mehr als einem Kommunikationskanal ein Signal senden.

Das beschriebene Verfahren vollzieht sich im Laufe der nacheinander folgenden Taktsegmente der Bustaktung. In jedem Taktsegment wird ein Zyklus des Arbitrationsverfahrens ausgeführt. Die Zyklen werden im Folgenden beschrieben.

Dargestellt ist in Figur 11 die Arbitration einer einzelnen Ziffer. Jeder Teilnehmer T1-T10 hat aus seiner Adresse eine Ziffer ermittelt, die in Binärdarstellung genau drei Einsen und zwei Nullen aufweist. Diese Ziffer ist in der Spalte jedes Teilnehmers T1-T10 eingetragen.

Im ersten Zyklus des Arbitrationsverfahrens, gekennzeichnet durch die Zeile mit dem Eintrag 1 in der Spalte C, sendet somit jeder Teilnehmer T1-T10 seine Ziffer auf den Bus. Auf dem Bus liegt somit das unter Bus eingetragene Signal "11111" an. Hierbei entspricht die erste Stelle des Eintrags dem in den Spalten der Teilnehmer zuoberst eingetragenen Kommunikationskanal, die zweite Stelle dem zweitobersten usw.

Im gleichen Taktsegment ermittelt jeder Teilnehmer, welches Signal auf den Kommunikationskanälen des Busses tatsächlich anliegt. Dieses Signal ergibt sich aus dem gesendeten Signal und den von anderen Teilnehmern gesendeten Signalen durch Überlagerung im Sinne einer logischen ODER-Verknüpfung. Auf jedem Kommunikationskanal liegt also in einem Taktsegment das Signal "1" genau dann an, wenn mindestens ein Teilnehmer dieses Signal in dem Taktsegment sendet. Die Teilnehmer verfügen somit nicht nur über Mittel zum Senden, sondern auch über Mittel.zum Empfangen. Vorzugsweise geschieht das Senden und Empfangen durch induktive Einkopplung in eine zweipolige Busleitung.

Somit erkennen die Teilnehmer T7, T8, T9, T10 anhand des Signals auf dem Bus, dass weitere Teilnehmer gesendet haben, die auf dem ersten, in der Tabelle obersten, Kommunikationskanal eine "1" gesendet haben, und die daher eine höhere Priorität besitzen. Die Teilnehmer T7, T8, T9 und T10 gehen daraufhin in einen Zuhörmodus oder einen Wartemodus über, gekennzeichnet durch den Eintrag "x" in ihrer Spalte.

Die Teilnehmer T1, T2, T3, T4, T5 und T6 erkennen nicht, ob weitere Teilnehmer mit höherer Priorität gesendet haben. Dies ist durch ein "v" in der jeweiligen Spalte gekennzeichnet.

Die Teilnehmer mit einem "v" in ihrer Spalte senden daraufhin in einem zweiten Zyklus ihre Ziffer erneut. Dieser zweite Zyklus ist in der Zeile mit dem Eintrag "2" unter der Spalte "C" symbolisch gezeigt. Der zweite Zyklus vollzieht sich in einem Taktsegment des Bustakts, das auf das Taktsegment des ersten Zyklus zeitlich folgt.

Nun wird der zweite Kommunikationskanal, in der Tabelle von oben beginnend, verglichen.

Die Teilnehmer T4, T5, T6 stellen fest, dass weitere Teilnehmer auf dem zweiten Kommunikationskanal gesendet haben und daher eine höhere Priorität besitzen. Sie gehen daraufhin in den Zuhörmodus oder Wartemodus über. Hier wie auch im Folgenden wird dies erneut durch einen Eintrag "x" an der entsprechenden Stelle der Tabelle symbolisiert.

Die Teilnehmer T1, T2, T3 stellen keinen weiteren Teilnehmer mit höherer Priorität fest. Sie setzen das Arbitrationsverfahren daher fort. Hier wie auch im Folgenden wird dies wieder durch einen Eintrag "v" an der entsprechenden Stelle der Tabelle symbolisiert.

Die Teilnehmer T1, T2, T3 senden nun in einem dritten Zyklus ihre Ziffer erneut. Dieser dritte Zyklus ist in der Zeile mit dem Eintrag "3" unter der Spalte "C" symbolisch gezeigt.

Im dritten Zyklus wird nun die Information auf dem dritten Kommunikationskanal verglichen.

Die Teilnehmer T2 und T3 erkennen, dass ein weiterer Teilnehmer mit einer höheren Priorität gesendet hat und gehen in den Zuhörmodus oder Wartemodus über.

Der verbliebene Teilnehmer T1 sendet nun in einem vierten Zyklus ihre Ziffer erneut. Dieser dritte Zyklus ist in der Zeile mit dem Eintrag "4" unter der Spalte "C" symbolisch gezeigt.

Der Teilnehmer T1 stellt fest, dass kein weiterer Teilnehmer mit höherer Priorität gesendet hat, da seine gesendete Ziffer mit dem Signal auf dem Bus übereinstimmt und die erlaubten Ziffern genau drei Einsen aufweisen.

Handelt es sich bei der gesendeten Ziffer um die letzte Ziffer seiner Adresse, so beginnt er mit dem Senden von Nutzdaten.

Handelt es sich bei der gesendeten Ziffer nicht um die letzte Ziffer seiner Adresse, so fährt er und alle eventuell vorhandenen Teilnehmer, welche die gleiche Ziffer gesendet haben, mit dem nächsten Arbitrationsschritt, bei dem die nächste Ziffer gesendet wird, fort.

Der vierte Zyklus kann auch unterbleiben, da Teilnehmer T1 anhand des Signals am Bus schon im dritten Zyklus erkennt, dass er der Gewinner ist, und da alle weiteren Teilnehmer nach der Abarbeitung von drei Kommunikationskanälen mit einer Eins entweder ebenfalls Gewinner oder ausgeschieden sind.

Wenn beispielsweise nur Teilnehmer T2 und T3 vorhanden wären, wäre im zweiten Zyklus auf dem Bus das Signal "11011". Teilnehmer T2 wüsste bereits jetzt, das er Gewinner ist, und Teilnehmer T3, dass er ausscheiden wird.

Im dargestellten Beispiel in Figur 11 weiß Teilnehmer T1 zwar schon im ersten Zyklus, dass er Gewinner sein wird, aber Teilnehmer T2 kann nicht erkennen, dass er ausscheiden muss, denn die Eins auf dem dritten Kommunikationskanal könnte auch von Teilnehmer T8 stammen. Es ist daher ein weiterer Zyklus erforderlich.

Die verwendete Ordnungsrelation ist somit die gewöhnliche Ordnungsrelation zwischen Zahlen, wobei dem in der Tabelle obersten Kommunikationskanal die höchste Potenz in der Binärdarstellung zugeordnet ist.

Bei einem weiteren Ausführungsbeispiel werden in den Zyklen der Reihe nach nur Kommunikationskanäle ausgewertet, bei denen überhaupt eine Eins gesendet wurde. Dies ist anhand des Signals auf dem Bus ersichtlich.

Bei weiteren Ausführungsbeispielen werden nur Ziffern mit einer festgelegten Zahl von Einsen und Nullen in der Binärdarstellung zugelassen, wobei die Zahl der Einsen von drei verschieden ist und/oder wobei die Summe der Zahl der Einsen und der Zahl der Nullen von fünf verschieden ist.

Das Verfahren nach Figur 11 hat gegenüber dem Verfahren nach Figur 8 den Vorteil, dass jede Ziffer einen größeren Informationsgehalt überträgt. So sind bei fünf Kanälen nicht fünf verschiedene Ziffern wie bei einem Verfahren analog zu Figur 8, sondern zehn verschiedene Ziffern übertragbar, die in Tabelle 11 dargestellt sind.

Besonders vorteilhafte Verhältnisse ergeben sich, wenn die Zahl der Einsen in etwa, also bis auf eine Differenz von Null oder Eins, gleich der Zahl der zugelassenen Nullen ist. Dann ist aus kombinatorischer Sicht die Zahl der verfügbaren Ziffern maximal.

Das beschriebene Verfahren ist auch einsetzbar, wenn die Zahl der Einsen in jeder zulässigen Ziffer nicht fixiert ist. In diesem Fall werden in Zyklen nacheinander alle Kommunikationskanäle abgearbeitet, zumindest jedoch so viele, bis der Gewinner eindeutig, also auch für die übrigen Teilnehmer, feststeht.

Figur 12 zeigt ein weiteres erfindungsgemäßes Arbitrationsverfahren in Form einer Tabelle. Dargestellt sind drei Teilnehmer T1, T2 und T3, die jeweils eine Ziffer auf einen Bus senden. Die Ziffern sind jeweils in Binärdarstellung vierstellig, eine Beschränkung der Zahl der Einsen besteht nicht.

In der umrahmten Zeile ist ein reservierter Kommunikationskanal gezeigt, der nicht für die Übermittlung der Ziffern der Adresse verwendet wird, sondern für den vorzeitigen Abschluss der Arbitration. Dieser Kommunikationskanal dient zur Übertragung eines Gewinner-Bits an alle Teilnehmer, das anzeigt, wenn ein Gewinner der Arbitration festliegt, so dass die anderen Teilnehmer die Arbitration beenden können.

Im Beispiel nach Figur 12 sendet ein Teilnehmer T1 die Ziffer "0010", T2 die Ziffer "1010" und T3 die Ziffer "1011".

Teilnehmer T1 erkennt, dass weitere Teilnehmer mit höherer Priorität senden und wechselt in einen Wartemodus.

Teilnehmer T3 erkennt anhand des Signals auf dem Bus, dass er Gewinner sein wird, denn kein Teilnehmer hat auf einem Kommunikationskanal, auf dem T1 eine Null gesendet hat, eine Eins gesendet.

Teilnehmer T2 und T3 senden ihre Adresse erneut. T3 sendet zusätzlich auf dem reservierten Kommunikationskanal eine Eins, um zu signalisieren, dass er Gewinner ist. Dies ist in der Tabelle durch den unteren umrahmten Bereich gekennzeichnet.

Teilnehmer T2 kann anhand des Signals auf dem Bus nicht erkennen, ob der weitere Teilnehmer eine "1011" oder eine "1001" gesendet hat. Im letzteren Fall wäre er Gewinner. Da aber auf dem zusätzlichen Kanal eine Eins gesendet wird, geht er in den Wartemodus über.

Durch die Verwendung des reservierten Kanals zur Signalisierung wird somit die Dauer der Arbitration im Durchschnitt verkürzt.

Der reservierte Kanal ist auch in dem Beispiel nach Figur 11 vorteilhaft verwendbar. Teilnehmer T1 könnte in diesem Fall seine Überlegenheit gegenüber den anderen Teilnehmern bereits im ersten Zyklus signalisieren. In dem Fall, dass nur Teilnehmer T4, T5 und T6 vorhanden sind, kann T4 bereits im zweiten Zyklus seine Überlegenheit signalisieren.

Bei weiteren Ausführungsbeispielen werden in den einzelnen Zyklen die bereits abgearbeiteten Kommunikationskanäle nicht erneut gesendet, sondern die Ziffern werden abgeschnitten oder trunkiert. Eine Auswertung der betreffenden abgehörten Kommunikationskanäle unterbleibt, oder die betreffenden Kommunikationskanäle werden gar nicht abgehört und/oder gar nicht mit Signalen beaufschlagt. Das Weglassen oder Ausblenden dieser Kommunikationskanäle vollzieht sich dabei nach einem festgelegten Schema, einer festgelegten Reihenfolge, die allen Teilnehmern bekannt ist. Beispielsweise wird bei den in der Beschreibung zu Figur 11 dargestellten Wiederholungen zunächst der oberste Kommunikationskanal - in der Tabelle der Figur 11 -, dann der zweitoberste Kommunikationskanal und so fort bei der Auswertung weggelassen. Da für die jeweils ausgeblendeten oder unterdrückten Kommunikationskanäle ein Vergleich der Prioritäten bereits im vorhergehenden Takt erfolgt ist, würde ein erneuter Vergleich nichts Neues ergeben, denn alle verbleibenden Teilnehmer senden auf diesem Kommunikationskanal dasselbe Signal.

Bei weiteren Ausführungsbeispielen ist die Zahl der Unterkanäle je Kanal weiter erhöht, wodurch sich die Ausfallrate nochmals reduziert.

Bei weiteren Ausführungsbeispielen ist der Vollkrels In eine Anzahl gleichgroßer Teilkreise geteilt, und die zufällige, relative Phasenverschiebung wird in Schrilten dieser Diskretisierung bestimmt. Besonders vorteilhaft ist die Verwendung von 90°- oder 180°-Schritten, da sich in diesem Fall die relative Phasenverschiebung der Signale durch Vorzeichenwechsel in den Real- beziehungsweise Imaginärteilen der Fourier-transformierten Signale ergibt.

Bei weiteren Ausführungsbeispielen liegt die Frequenz des mittelfrequenten Stromes zwischen 10 kHz und 100 kHz.

Bei einem weiteren Ausführungsbeispiel ist das Bussystem von einer Anlage umfasst, deren räumliche Abmessung so groß gewählt ist, dass bei Signalübertragung zwischen zwei Kommunikationsteilnehmer der empfangende Kommunikationsteilnehmer im Wesentlichen das Femfeld des von dem sendenden Kommunikationsteilnehmer ausgehenden Signals erfasst. In diesem Fall werden durch die Erfindung vorteilhaft Übertragungsfehler vermieden, die durch die Anordnung eines Teilnehmers im Knoten der Signale eines anderen Teilnehmers verursacht werden.

Die Erfindung betrifft allgemein ein Verfahren zur Busarbitration zum Einsatz bei Mehrträger-Modulationsverfahren, beispielsweise OFDM oder FDM. Jedem Teilnehmer an einem Bus wird eine eindeutige den Teilnehmer identifizierende Adresse zugeordnet, die bei jeder Kommunikationsaufnahme gesendet wird. Hierbei wird die Adresse als Folge binärer Ziffern dargestellt, wobei die Zahl der Bits der binären Ziffern gleich der Zahl der verwendeten Träger im Mehrträger-Modulationsverfahren ist. Diese Folge binärer Ziffern wird sukzessive zur Arbitration über das Mehrträger-Modulationsverfahren gesendet, wobei ein Teilnehmer aus der Arbitration ausscheidet, wenn ein weiterer Teilnehmer gleichzeitig eine binäre Ziffer mit höherer Priorität gesendet hat. Das Senden der binären Ziffer kann wiederholt werden, wenn die Arbitration der Ziffer nicht in einem Schritt zu einem Ergebnis führt. Bei einer Anlage zur berührungslosen Energieversorgung ist das Verfahren zur Busarbitration vorteilhaft einsetzbar. Eine redundante Versendung phasenverschobener Signale vermindert die Ausfallrate aufgrund von zufälliger destruktiver Interferenz.

## Patentansprüche

1. Verfahren zur Busarbitration,
wobei Kommunikationsteilnehmern (**401, 402, 501, 502, 503**), die über einen Bus kommunizieren, jeweils eine eindeutig identifizierende Folge von Identifikationseinheiten (**404, 504**) zugeordnet ist, wobei eine Anzahl n nummerierter bidirektionaler Kommunikationskanäle (**122**) verwendet wird, wobei die Zahl n größer als eins ist,
wobei mindestens einer der Kommunikationsteilnehmer (**401, 402, 501, 502, 503**) eine Kommunikationsaufnahme ausführt, wobei er bei Kommunikationsbeginn (**408, 508**) in einem ersten Zeitabschnitt zur Kommunikationsaufnahme prüft, ob ein weiterer Teilnehmer (**401, 402, 501, 502, 503**) mit einer höheren Priorität eine Kommunikationsaufnahme ausführt,
wobei die Priorität durch Vergleich der bei Kommunikationsaufnahme über die Kommunikationskanäle (**122**) ausgesendeten Information und der bei Kommunikationsaufnahme von dem weiteren Teilnehmer (**401, 402, 501, 502, 503**) über die Kommunikationskanäle (**122**) empfangenen Information bestimmt wird,
wobei der erste Zeitabschnitt mehrere Zeitsegmente umfasst, wobei
a) in einem ersten Zeitsegment von dem einen der kommunikationsteilnehmer (**401, 402, 501, 502, 503**) eine Identifikationseinheit (**404, 504**) über die Kommunikationskanäle (**122**) gesendet wird und gleichzeitig die auf allen Kommunikationskanälen (**122**) jeweils anliegenden Signale erfasst werden,
b1) bei Übereinstimmung der erfassten Signale mit der gesendeten Identifikationseinheit der eine der Kommunikationsteilnehmer (**401, 402, 501, 502, 503**) in einem auf das erste Zeitsegment folgende Zeitsegment mit einer nächsten Identifikationseinheit gemäß Schritt a) fortfährt,
d) nach Sendung der vollständigen Identifikation der eine der Kommunikationsteilnehmer (**401, 402, 501, 502, 503**) mit dem Senden von Nutzdaten (**410, 510**) beginnt
**dadurch gekennzeichnet, dass**
die Kommunikationskanäle (122) voneinander verschiedene Frequenzbänder auf einem gemeinsamen Träger sind.

2. Verfahren nach Anspruch 1, wobei
b2) bei Abweichung der erfassten Signale von der gesendeten Identifikationseinheit (**404**, **504**) der eine der Kommunikationsteilnehmer (**401, 402, 501, 502, 503**) aus den abweichenden, erfassten Signale die Prioritäten der weiteren Kommunikationsteilnehmer (**401, 402, 501**, **502, 503**) ermittelt, die Signale gesendet haben und der eine der Kommunikationsteilnehmer (**401, 402, 501, 502, 503**) in einem auf das aktuelle Zeitsegment folgende Zeitsegment mit einer nächsten Identifikationseinheit (**404, 504**) gemäß Schritt a) fortfährt, wenn keiner der anderen kommunikationsteilnehmer (**401, 402, 501, 502, 503**) eine höhere Priorität besitzt.

3. Verfahren nach einem der vorangegangenen Ansprüche, wobei
c) der Kommunikationsteilnehmer (**401, 402, 501, 502, 503**) in einen Zuhör-Modus (**430**) oder einen Warte-Modus wechselt, wenn er nicht die höchste Priorität unter den ermittelten Prioritäten besitzt,
und/oder dass
die Zeitsegmente die Taktsegmente einer Bustaktung sind
und/oder dass
die Signale im OFDM-Verfahren über die Kommunikationskanäle (**122**) übertragen werden,
und/oder dass
die Kommunikationskanäle (**122**) sowohl zur Arbitration als auch zur Übertragung von Nutzdaten (**410, 510**) verwendet werden,
und/oder dass
der Träger zusätzlich zur Kommunikation auch zur berührungslosen Energieübertragung verwendet wird, insbesondere der Träger als Primärleiter eines Systems zur berührungslosen Energieversorgung ausgebildet ist.

4. Verfahren nach einem der vorangegangenen Ansprüche,
wobei
die Identifikationseinheiten induktiv in den Träger eingekoppelt und induktiv aus dem Träger ausgekoppelt werden.

5. Verfahren zur Busarbitration nach einem der vorangegangenen Ansprüche,
wobei jedem Kommunikationsteilnehmer (**401, 402, 501, 502, 503**) eine eindeutige Adresse als Folge von Ziffern zugewiesen ist,
wobei der Bus mit einer Bustaktung getaktet ist,
wobei
jeder Kommunikationsteilnehmer (**401, 402, 501, 502, 503**) bei Kommunikationsaufnahme die Ziffern in der Reihenfolge der Folge seiner Adresse nacheinander jeweils für die Dauer eines Taktsegments der Bustaktung als FDM-Signal oder OFDM-Signal auf den Bus sendet, gleichzeitig das auf dem Bus anliegende FDM-Signal oder OFDM-Signal abhört und im folgenden Taktsegment aus der Arbitration ausscheidet, wenn er einen weiteren Kommunikationsteilnehmer (**401, 402, 501, 502, 503**), dessen aktuell gesendete Ziffer ein höhere Priorität aufweist als die eigene, feststellt.

6. Verfahren nach Anspruch 5,
wobei
folgende Schritte in einer zeitlichen Reihenfolge abgearbeitet werden:
i) jeder Kommunikationsteilnehmer (**401, 402, 501, 502, 503**) sendet in einem ersten Taktsegment die erste Ziffer seiner Folge von Ziffern an die Kommunikationskanäle (**122**) und hört gleichzeitig die Kommunikationskanäle (**122**) ab,
ii) jeder Kommunikationsteilnehmer (**401, 402, 501, 502, 503**) geht in einen anderen Zustand über, wenn das abgehörte Signal von den Kommunikationskanälen (**122**) durch eine Überlagerung der gesendeten Ziffer mit einer Ziffer höherer Priorität entsteht,
iii) jeder Kommunikationsteilnehmer (**401, 402, 501, 502, 503**) wiederholt in den folgenden Taktsegmenten die Schritte i) und ii),
wobei bei jeder Wiederholung nach einer vorgegebenen Reihenfolge ein Kommunikationskanal (**122**) weniger ausgewertet wird,
bis das abgehörte Signal der ausgewerteten Kommunikationskanäle (**122**) nicht mehr aus der Überlagerung des betreffenden Anteils seiner gesendeten Ziffer und einer weiteren Ziffer bildbar ist,
iv) jeder Kommunikationsteilnehmer (**401, 402, 501, 502, 503**) beginnt im folgenden Taktsegment mit dem Senden von Nutzdaten (**410, 510**) über die Kommunikationskanäle (**122**), falls die bestimmte Ziffer die letzte Ziffer in seiner Folge von Ziffern ist,
v) jeder Kommunikationsteilnehmer (**401, 402, 501, 502, 503**) fährt mit Schritt i) mit der nächsten Ziffer in seiner Folge von Ziffern fort.

7. Verfahren nach Anspruch 5 oder 6,
wobei
die Ziffern und Nutzdaten (**410, 510**) über die Kommunikationskanäle (**122**) im OFDM-Verfahren gesendet werden,
wobei jeder Kommunikationskanal (**122**) durch ein Frequenzband auf einer elektrischen Leitung, gebildet wird.

8. Verfahren nach einem der Anspruche 5 bis 7,
wobei jedem Kommunikationsteilnehmer (**401, 402, 501, 502, 503**) eine Nummer zugewiesen ist, wobei
folgende Schritte in einer zeitlichen Reihenfolge abgearbeitet werden
i) der eine der Kommunikationsteilnehmer (**401, 402, 501, 502, 503**) bestimmt die erste Ziffer in der Zahlendarstellung zur Basis n seiner Nummer,
ii) der eine der Kommunikationsteilnehmer (**401, 402, 501, 502, 503**) sendet ein Signal auf dem Kommunikationskanal (**122**), dessen Nummer gleich der bestimmten Ziffer ist, und hört gleichzeitig die übrigen Kommunikationskanäle (**122**) ab,
iii) der eine der Kommunikationsteilnehmer (**401, 402, 501, 502, 503**) geht in einen anderen Zustand über, wenn auf einem Kommunikationskanal (**122**) mit einer höheren Nummer als die bestimmte Ziffer während des Schrittes ii) gesendet wurde,
iv) der eine der Kommunikationsteilnehmer (**401, 402, 501, 502, 503**) beginnt mit dem Senden von Nutzdaten (**410, 510**), falls die bestimmte Ziffer die letzte Ziffer in der Zahlendarstellung zur Basis n seiner Nummer ist,
v) der eine der Kommunikationsteilnehmer (**401, 402, 501, 502, 503**) bestimmt die nächstfolgende Ziffer in der Zahlendarstellung zur Basis n seiner Nummer und fährt mit Schritt ii) fort.

9. Verfahren nach einem der Ansprüche 1 bis 8,
wobei
die dem einen von den Kommunikationsteilnehmern (**401, 402, 501, 502, 503**) zugewiesene Nummer oder Folge von Identifikationseinheiten (404, 504) diesen eindeutig identifiziert.

10. Verfahren nach einem der Ansprüche 1 bis 9,
wobei
ein Kommunikationskanal (**122**) von einem Kommunikationsteilnehmer (**401, 402, 501, 502**, **503**) als mit einem Signal beaufschlagt gewertet wird, wenn auf mindestens einem der Unterkanäle des Kommunikationskanals (**122**) ein Signal detektiert wird

11. Verfahren nach einem der Ansprüche 1 bis 10,
wobei
ein Kommunikationsteilnehmer (**401, 402, 501, 502, 503**) auf einem reservierten Kommunikationskanal (**122**) ein Signal sendet, wenn für den Kommunikationsteilnehmer (**401, 402, 501, 502, 503**) feststeht,
dass er das Arbitrierungsverfahren gewinnen wird,
und dass die von den Kommunikationsteilnehmern (**401, 402, 501, 502, 503**), die auf dem reservierten Kommunikationskanal (**122**) ein Signal empfangen, die Arbitrierung beenden, ausscheiden, wenn sie nicht Gewinner des Arbitrationsverfahrens sind.

12. Verfahren nach einem der Ansprüche 1 bis 11,
wobei
die übertragenen Signale sinusförmig sind oder eine Überlagerung von sinusförmigen Signalen ergeben, wobei die Zahl der übertagerten sinusförmigen Signale kleiner als die oder gleich der Zahl der Kommunikationskanäle (**122**) ist.

13. **Vorrichtung zur Busarbitration,**
mit Kommunikationsteilnehmern, denen jeweils eine eindeutig identifizierende Folge von Identifikationseinheiten zugeordnet ist,
wobei die Kommunikationsteilnehmer dazu geeignet sind, dass
- sie über einen Bus kommunizieren,
- eine Anzahl n nummerierter bidirektionaler Kommunikationskanäle verwendet wird, wobei die Zahl n größer als eins ist,
- mindestens einer der Kommunikationsteilnehmer eine Kommunikationsaufnahme ausführt,
wobei er bei Kommunikationsbeginn in einem ersten Zeitabschnitt zur Kommunikationsaufnahme prüft, ob ein weiterer der Kommunikationsteilnehmer mit einer höheren Priorität eine Kommunikationsaufnahme ausführt,
wobei die Priorität durch Vergleich der bei Kommunikationsaufnahme über die Kommunikationskanäle ausgesendeten Information und der bei Kommunikationsaufnahme von dem weiteren einen der Kommunikationsteilnehmern über die Kommunikationskanäle empfangenen Information bestimmt wird, wobei der erste Zeitabschnitt mehrere Zeitsegmente umfasst,
wobei
a) in einem ersten Zeitsegment von dem einen der Kommunikationsteilnehmern eine Identifikationseinheit über die Kommunikationskanäle gesendet wird und gleichzeitig die auf allen Kommunikationskanälen jeweils anliegenden Signale erfasst werden,
b1) bei Übereinstimmung der erfassten Signale mit der gesendeten Identifikationseinheit der eine der Kommunikationsteilnehmer in einem auf das erste Zeitsegment folgende Zeitsegment mit einer nächsten Identifikationseinheit gemäß Schritt a) fortfährt,
d) nach Sendung der vollständigen Identifikation der eine der Kommunikationsteilnehmer mit dem Senden von Nutzdaten beginnt
**dadurch gekennzeichnet, dass**
die Kommunikationskanäle voneinander verschiedene Frequenzbänder auf einem gemeinsamen Träger sind.

14. Umrichter,
mit
Mittel zum Senden und/oder zum Empfang von Daten im OFDM-Verfahren über einen Bus vorhanden sind,
wobei der Umrichter dazu geeignet ist, ein Verfahren zur Busarbitration nach einem der Ansprüche 1 bis 12 in dem auszuführen.

15. Fertigungsanlage,
umfassend Antriebseinheiten, die berührungslos energieversorgt sind, und einen Bus, über den zumindest zwischen den Antriebseinheiten Daten austauschbar sind,
**dadurch gekennzeichnet, dass**
die Antriebseinheiten Mittel zur Durchführung eines Verfahrens nach einem der Ansprüche 1 bis 12 aufweisen.

## Claims

1. Method for bus arbitration,
wherein communications users (401, 402, 501, 502, 503) which communicate via a bus are each assigned a uniquely identifying sequence of identification units (404, 504), a number n of numbered bidirectional communication channels (122) being used, the number n being greater than one,
at least one of the communications users (401, 402, 501, 502, 503) initiating a communication, in doing which, at the beginning of the communication (408, 508) in a first time interval with respect to the communication initiation, it checks whether a further user (401, 402, 501, 502, 503) having a higher priority is initiating a communication, the priority being determined by comparing the information sent out via the communication channels (122) upon communication initiation and the information received from the further user (401, 402, 501, 502, 503) via the communication channels (122) upon communication initiation,
the first time interval including a plurality of time segments, wherein
a) in a first time segment, an identification unit (404, 504) is transmitted by the one of the communications users (401, 402, 501, 502, 503) via the communication channels (122), and simultaneously on all communication channels (122) the signals respectively present are detected,
b1) upon agreement of the detected signals with the transmitted identification unit, in a time segment following the first time segment, the one of the communications users (401, 402, 501, 502, 503) continues with a next identification unit according to step a),
d) after transmitting the complete identification, the one of the communications users (401, 402, 501, 502, 503) begins with the transmission of useful data (410, 510), **characterised in that**
the communication channels (122) are frequency bands, differing from each other, on a common carrier.

2. Method according to Claim 1,
wherein
b2) upon deviation of the detected signals from the transmitted identification unit (404, 504), the one of the communications users (401, 402, 501, 502, 503) ascertains, from the deviating detected signals, the priorities of the further communications users (401, 402, 501, 502, 503) which have transmitted signals, and in a time segment following the current time segment, the one of the communications users (401, 402, 501, 502, 503) continues with a next identification unit (404, 504) according to step a) if none of the other communications users (401, 402, 501, 502, 503) possesses a higher priority.

3. Method according to one of the preceding claims, wherein
c) the one of the communications users (401, 402, 501, 502, 503) switches to a listening mode (430) or a waiting mode if it does not possess the highest priority among the priorities ascertained,
and/or that [sic]
the time segments are the clock-pulse segments of a bus clocking
and/or that [sic]
the signals are transmitted via the communication channels (122) using the OFDM method,
and/or that [sic]
the communication channels (122) are used both for arbitration and for transmitting useful data (410, 510), and/or that [sic]
in addition to communication, the carrier is also used for contactless energy transmission, in particular the carrier takes the form of a primary conductor of a system for contactless energy supply.

4. Method according to one of the preceding claims,
wherein
the identification units are inductively coupled into the carrier and inductively coupled out of the carrier.

5. Method for bus arbitration according to one of the preceding claims,
wherein each communications user (401, 402, 501, 502, 503) is assigned a unique address as a sequence of numerals,
wherein the bus is clocked with a bus clocking,
wherein, upon communication initiation, each communications user (401, 402, 501, 502, 503) transmits the numerals in the order of the sequence of its address one after another as an FDM signal or an OFDM signal onto the bus in each case for the duration of one clock-pulse segment of the bus clocking, at the same time listens in to the FDM signal or the OFDM signal present on the bus, and in the following clock-pulse segment, drops out of the arbitration if it detects a further communications user (401, 402, 501, 502, 503) whose currently transmitted numeral has a higher priority than its own.

6. Method according to Claim 5,
wherein
the following steps are executed in a chronological order:
i) in a first clock-pulse segment, each communications user (401, 402, 501, 502, 503) sends the first numeral in its sequence of numerals to the communication channels (122), and at the same time listens in to the communication channels (122), -
ii) each communications user (401, 402, 501, 502, 503) changes into a different state if the signal monitored on the communication channels (122) is formed by a superimposition of the transmitted numeral with a numeral of higher priority,
iii) in the following clock-pulse segments, each communications user (401, 402, 501, 502, 503) repeats steps i) and ii),
upon each repetition, one communication channel (122) less being evaluated in a predefined order,
until the monitored signal of the evaluated communication channels (122) is no longer able to be formed from the superimposition of the respective component of its transmitted numeral and a further numeral,
iv) in the following clock-pulse segment, each communications user (401, 402, 501, 502, 503) begins with the transmission of useful data (410, 510) via the communication channels (122) if the numeral determined is the last numeral in its sequence of numerals,
v) each communications user (401, 402, 501, 502, 503) continues with step i) with the next numeral in its sequence of numerals.

7. Method according to Claim 5 or 6,
wherein
the numerals and useful data (410, 510) are transmitted via the communication channels (122) using the OFDM method,
each communication channel (122) being formed by one frequency band on an electric line.

8. Method according to one of Claims 5 to 7,
wherein each communications user (401, 402, 501, 502, 503) is assigned a number,
the following steps being executed in a chronological order:
i) the one of the communications users (401, 402, 501, 502, 503) determines the first numeral in the numerical representation with respect to the base n of its number,
ii) the one of the communications users (401, 402, 501, 502, 503) transmits a signal on the communication channel (122) whose number is identical to the numeral determined, and at the same time listens in to the remaining communication channels (122),
iii) the one of the communication users (401, 402, 501, 502, 503) changes into a different state if transmission was carried out during step ii) on a communication channel (122) having a higher number than the numeral determined,
iv) the one of the communications users (401, 402, 501, 502, 503) begins with the transmission of useful data (410, 510) if the numeral determined is the last numeral in the numerical representation with respect to the base n of its number,
v) the one of the communications users (401, 402, 501, 502, 503) determines the next following numeral in the numerical representation with respect to the base n of its number and continues with step (ii).

9. Method according to one of Claims 1 to 8,
wherein
the number or sequence of identification units (404, 504) assigned to the one of the communications users (401, 402, 501, 502, 503) uniquely identifies it.

10. Method according to one of Claim 1 to 9,
wherein
a communication channel (122) is evaluated by a communications user (401, 402, 501, 502, 503) as receiving a signal if a signal is detected on at least one of the subchannels of the communication channel (122).

11. Method according to one of Claims 1 to 10,
wherein
a communications user (401, 402, 501, 502, 503) transmits a signal on a reserved communication channel (122) if it is certain for the communications user (401, 402, 501, 502, 503) that it will win the arbitration process,
and that [sic] those of the communications users (401, 402, 501, 502, 503) which receive a signal on the reserved communication channel (122) terminate the arbitration, drop out, if they are not winners of the arbitration process.

12. Method according to one of Claims 1 to 11,
wherein
the transmitted signals are sinusoidal or result in a superimposition of sinusoidal signals, the number of superimposed sinusoidal signals being less than or equal to the number of communication channels (122).

13. Device for bus arbitration,
having communications users which are each assigned a uniquely identifying sequence of identification units,
the communications users being adapted
- to communicate via a bus,
- a number n of numbered bidirectional communication channels being used, the number n being greater than one,
- at least one of the communications users initiating a communication,
in doing which, at the beginning of the communication in a first time interval with respect to the communication initiation, it checks whether a further of the communications users having a higher priority is initiating a communication,
the priority being determined by comparing the information sent out via the communication channels upon communication initiation and the information received from the further one of the communications users via the communication channels upon communication initiation,
the first time interval including a plurality of time segments,
wherein
a) in a first time segment, an identification unit is transmitted by the one of the communications users via the communication channels, and simultaneously on all communication channels the signals respectively present are detected,
b1) upon agreement of the detected signals with the transmitted identification unit, in a time segment following the first time segment, the one of the communications users continues with a next identification unit according to step a),
d) after transmitting the complete identification, the one of the communications users begins with the transmission of useful data,
**characterised in that**
the communication channels are frequency bands, differing from each other, on a common carrier.

14. Converter,
having
means for transmitting and/or receiving data via a bus using the OFDM method are present [sic],
the converter being adapted to perform a method for bus arbitration according to one of Claims 1 to 12 in the [sic].

15. Production facility,
comprising drive units supplied with energy in contactless fashion, and a bus via which data is exchangeable at least between the drive units, **characterised in that**
the drive units have means for performing a method according to one of Claims 1 to 12.

## Revendications

1. Procédé d'arbitrage de bus,
dans lequel une suite identifiante unique d'unités d'identification (404, 504) est associée à chacun des abonnés de communication (401, 402, 501, 502, 503) qui communiquent via un bus, un nombre n de canaux de communication bidirectionnels numérotés (122) étant utilisé, le nombre n étant supérieur à un,
dans lequel au moins un des abonnés de communication (401, 402, 501, 502, 503) effectue une entrée en communication en contrôlant au début de la communication (408, 508), dans un premier intervalle de temps de l'entrée en communication, si un autre abonné (401, 402, 501, 502, 503) de plus haute priorité effectue une entrée en communication, la priorité étant déterminée par comparaison de l'information envoyée par les canaux de communication (122) lors de l'entrée en communication et de l'information reçue de l'autre abonné (401, 402, 501, 502, 503) par les canaux de communication (122) lors de l'entrée en communication, le premier intervalle de temps comprenant plusieurs segments de temps, sachant que
a) dans un premier segment de temps, ledit un des abonnés de communication (401, 402, 501, 502, 503) envoie une unité d'identification (404, 504) par les canaux de communication (122) et en même temps détecte les signaux présents sur tous les canaux de communication (122),
b1) en cas de concordance des signaux détectés avec l'unité d'identification envoyée, ledit un des abonnés de communication (401, 402, 501, 502, 503) poursuit selon l'étape a) dans un segment de temps consécutif au premier segment de temps avec une unité d'identification suivante,
d) après envoi de l'identification complète, ledit un des abonnés de communication (401, 402, 501, 502, 503) commence à envoyer des données utiles (410, 510), **caractérisé en ce que**
les canaux de communication (122) sont des bandes de fréquence différentes les unes des autres sur un support commun.

2. Procédé selon la revendication 1, dans lequel
b2) en cas de différence des signaux détectés avec l'unité d'identification envoyée (404, 504), ledit un des abonnés de communication (401, 402, 501, 502, 503) détermine à partir des signaux détectés différents les priorités des autres abonnés de communication (401, 402, 501, 502, 503) qui ont envoyé des signaux et ledit un des abonnés de communication (401, 402, 501, 502, 503) poursuit selon l'étape a) dans un segment de temps consécutif au segment de temps actuel avec une unité d'identification suivante (404, 504) si aucun des autres abonnés de communication ne possède une priorité plus élevée.

3. Procédé selon une des revendications précédentes,
dans lequel
c) ledit un des abonnés de communication (401, 402, 501, 502, 503) passe dans un mode d'écoute (430) ou un mode d'attente s'il ne possède pas la priorité la plus élevée parmi les priorités déterminées,
et/ou
les segments de temps sont les segments d'horloge d'une horloge de bus et/ou
les signaux sont transmis par les canaux de communication au moyen du procédé OFDM
et/ou
les canaux de communication (122) sont utilisés aussi bien pour l'arbitrage que pour la transmission de données utiles (410, 510)
et/ou
le support est utilisé, en plus de la communication, pour la transmission d'énergie sans contact, en particulier le support est conçu comme conducteur primaire d'un système d'alimentation en énergie sans contact.

4. Procédé selon une des revendications précédentes,
dans lequel les unités d'identification sont couplées dans le support par induction et découplées du support par induction.

5. Procédé d'arbitrage de bus selon une des revendications précédentes,
dans lequel une adresse unique sous la forme d'une suite de chiffres est allouée à chaque abonné de communication (401, 402, 501, 502, 503),
dans lequel le bus est cadencé par une horloge de bus,
dans lequel chaque abonné de communication (401, 402, 501, 502, 503), lors de son entrée en communication, envoie successivement sur le bus les chiffres dans l'ordre de la suite de son adresse sous la forme d'un signal FDM ou OFDM, chaque fois pendant la durée d'un segment d'horloge de l'horloge de bus,
écoute en même temps le signal FDM ou OFDM présent sur le bus et, dans le segment d'horloge suivante, quitte l'arbitrage s'il constate un autre abonné de communication (401, 402, 501, 502, 503) dont le chiffre actuellement envoyé possède une priorité plus élevée que la sienne.

6. Procédé selon la revendication 5,
dans lequel les étapes suivantes sont exécutées dans un ordre chronologique :
i) chaque abonné de communication (401, 402, 501, 502, 503) envoie dans un premier segment d'horloge le premier chiffre de sa suite de chiffres sur les canaux de communication (122) et écoute en même temps les canaux de communication (122),
ii) chaque abonné de communication (401, 402, 501, 502, 503) passe dans un autre état si le signal écouté des canaux de communication (122) résulte d'une superposition du chiffre envoyé avec un chiffre de plus haute priorité,
iii) chaque abonné de communication (401, 402, 501, 502, 503) répète les étapes i) et ii) dans les segments d'horloge suivants,
un canal de communication de moins étant évalué à chaque répétition, dans un ordre prédéfini, jusqu'à ce que le signal écouté des canaux de communication (122) évalués ne puisse plus être formé à partir de la superposition de la part concernée de son chiffre envoyé et d'un autre chiffre,
iv) chaque abonné de communication (401, 402, 501, 502, 503) commence, dans le segment d'horloge suivant, à envoyer des données utiles (410, 510) par les canaux de communication (122) si le chiffre déterminé est le dernier chiffre de sa suite de chiffres,
v) chaque abonné de communication (401, 402, 501, 502, 503) poursuit par l'étape i) avec le chiffre suivant de sa suite de chiffres.

7. Procédé selon la revendication 5 ou 6,
dans lequel les chiffres et les données utiles (410, 510) sont envoyés par les canaux de communication (122) au moyen du procédé OFDM,
chaque canal de communication (122) étant formé par une bande de fréquences sur une ligne électrique.

8. Procédé selon une des revendications 5 à 7,
dans lequel un numéro est alloué à chaque abonné de communication (401, 402, 501, 502, 503),
dans lequel les étapes suivantes sont exécutées dans un ordre chronologique
i) ledit un des abonnés de communication (401, 402, 501, 502, 503) détermine le premier chiffre dans la représentation numérique en base n de son numéro,
ii) ledit un des abonnés de communication (401, 402, 501, 502, 503) envoie un signal sur le canal de communication (122) dont le numéro est égal au chiffre déterminé et écoute en même temps les autres canaux de communication (122),
iii) ledit un des abonnés de communication (401, 402, 501, 502, 503) passe dans un autre état s'il y a eu une émission sur un canal de communication (122) de numéro plus élevé que le chiffre déterminé pendant l'étape ii),
iv) ledit un des abonnés de communication (401, 402, 501, 502, 503) commence à envoyer des données utiles (410, 510) si le chiffre déterminé est le dernier chiffre dans la représentation numérique en base n de son numéro,
v) ledit un des abonnés de communication (401, 402, 501, 502, 503) détermine le chiffre immédiatement consécutif dans la représentation numérique en base n de son numéro et poursuit par l'étape ii).

9. Procédé selon une des revendications 1 à 8,
dans lequel le numéro ou la suite d'unités d'identification (404, 504) attribué(e) audit un des abonnés de communication (401, 402, 501, 502, 503) identifie celui-ci de manière unique.

10. Procédé selon une des revendications 1 à 9,
dans lequel un canal de communication (122) d'un abonné de communication (401, 402, 501, 502, 503) est évalué comme étant soumis à un signal si un signal est détecté sur au moins un des sous-canaux du canal de communication (122).

11. Procédé selon une des revendications 1 à 10,
dans lequel un abonné de communication (401, 402, 501, 502, 503) envoie un signal sur un canal de communication (122) réservé s'il est établi pour l'abonné de communication (401, 402, 501, 502, 503) qu'il gagnera le procédé d'arbitrage,
et ceux des abonnés de communication (401, 402, 501, 502, 503) qui reçoivent un signal sur le canal de communication (122) réservé arrêtent et quittent l'arbitrage s'ils ne sont pas gagnants du procédé d'arbitrage.

12. Procédé selon une des revendications 1 à 11,
dans lequel les signaux transmis sont sinusoïdaux ou produisent une superposition de signaux sinusoïdaux, le nombre de signaux sinusoïdaux superposés étant inférieur ou égal au nombre de canaux de communication (122).

13. Dispositif d'arbitrage de bus,
avec des abonnés de communication à chacun desquels est associée une suite identifiante unique d'unités d'identification,
les abonnés de communication étant conçus pour
- communiquer via un bus,
- utiliser un nombre n de canaux de communication bidirectionnels numérotés, le nombre n étant supérieur à un,
- au moins un des abonnés de communication effectuant une entrée en communication,
en contrôlant au début de la communication, dans un premier intervalle de temps de l'entrée en communication, si un autre des abonnés de communication de plus haute priorité effectue une entrée en communication,
la priorité étant déterminée par comparaison de l'information envoyée par les canaux de communication lors de l'entrée en communication et de l'information reçue dudit autre des abonnés de communication par les canaux de communication lors de l'entrée en communication, le premier intervalle de temps comprenant plusieurs segments de temps,
sachant que
a) dans un premier segment de temps, ledit un des abonnés de communication envoie une unité d'identification par les canaux de communication et en même temps détecte les signaux présents sur tous les canaux de communication,
b1) en cas de concordance des signaux détectés avec l'unité d'identification envoyée, ledit un des abonnés de communication poursuit selon l'étape a) dans un segment de temps consécutif au premier segment de temps avec une unité d'identification suivante,
d) après envoi de l'identification complète, ledit un des abonnés de communication commence à envoyer des données utiles,
**caractérisé en ce que**
les canaux de communication sont des bandes de fréquence différentes les unes des autres sur un support commun.

14. Variateur de vitesse,
avec des moyens pour envoyer et/ou pour recevoir des données au moyen du procédé OFDM via un bus,
le variateur de vitesse étant conçu pour exécuter un procédé d'arbitrage de bus selon une des revendications 1 à 12.

15. Installation de fabrication,
comprenant des unités d'entraînement qui sont alimentées en énergie sans contact et un bus via lequel des données peuvent être échangées au moins entre les unités d' entraînement,
**caractérisée en ce que**
les unités d'entraînement présentent des moyens pour exécuter un procédé selon une des revendications 1 à 12.
